(19) **Europäisches Patentamt**
**European Patent Office**
**Office européen des brevets**

(11) **EP 2 328 308 B1**

(12) **EUROPEAN PATENT SPECIFICATION**

(45) Date of publication and mention
of the grant of the patent:
**18.07.2012 Bulletin 2012/29**

(51) Int Cl.:
***H04L 12/56*** (2006.01)

(21) Application number: **09177406.7**

(22) Date of filing: **27.11.2009**

(54) **Method for building a path according to adaptation functions using an ant colony**

Verfahren zum Aufbau eines Pfads gemäß Anpassungsfunktionen unter Verwendung einer Ameisenkolonie

Procédé de création d'un chemin selon les fonctions d'adaptation en utilisant une colonie de fourmis

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**01.06.2011 Bulletin 2011/22**

(73) Proprietor: **Alcatel Lucent**
**75007 Paris (FR)**

(72) Inventors:
• **Pouyllau, Helia**
**91620, NOZAY (FR)**
• **Douville, Richard**
**91620, NOZAY (FR)**

(74) Representative: **Sciaux, Edmond et al**
**Alcatel-Lucent International**
**Intellectual Property & Standards**
**32 Avenue Kléber**
**92700 Colombes (FR)**

(56) References cited:
**US-B1- 7 382 731      US-B1- 7 466 655**

• **JIPENG ZHOU ET AL: "A Location-Based Fault-Tolerant Routing Algorithm for Mobile Ad Hoc Networks" COMMUNICATIONS AND MOBILE COMPUTING, 2009. CMC '09. WRI INTERNATIONAL CONFERENCE ON, IEEE, PISCATAWAY, NJ, USA, 6 January 2009 (2009-01-06), pages 92-96, XP031434755 ISBN: 978-0-7695-3501-2**

**Description**

FIELD OF THE INVENTION

The present invention relates to a method for building a path between a source node and a destination node for a network system. The invention also relates to a network management for carrying out said method.

Such a method may be used in any network system supporting a plurality of protocols technologies.

BACKGROUND OF THE INVENTION

When a service has to be established (such as for example a data transmission) between a source node and a destination node, an end-to-end path has to be computed satisfying quality of service QoS requirements (e.g. bandwidth superior to a threshold value) expressed by a demand.
The document "Location-Based Fault-Tolerant Routing Algorithm for Mobile Ad Hoc Networks" (JIPENG ZHOU and AI) - referenced Communications and Mobile Computing, 2009. CMC '09. WRI International Conference On, IEEE, Piscataway, NJ, USA, 6 January 2009 (2009-01-06) pages 92-96, discloses an end-to-end path computation algorithm.

A method for building a path between a source node and a destination node in a network system, well-known by the man skilled in the art, uses an ant colony to select a path at a source node for sending data towards the destination node according to quality and cost metric.
Patent US 7 382 731 (Zhao Fuyong and AI) discloses such a method.
Besides, nodes and/or edges of a network system have often several adaptation functions, so that they can interconnect using different protocol technology (e.g. IP, Ethernet, MPLS, etc.). In a not limited example, possible adaptation functions are: a first protocol encapsulating a second protocol, a first protocol desencapsulating a second protocol, the second protocol encapsulating the first protocol, and the second protocol desencapsulating the first protocol.
Although, it is preferable that the same protocol is used along the path avoiding adding costs of encapsulation, it might not be possible sometimes to satisfy both the QoS requirements meanwhile having the same protocol. Hence, adaptation functions of nodes and/or edges must be used to permit the delivery of a service.

One problem of the well-known prior art is that the building method of the prior art doesn't address the problem of building a path under such adaptive constraints, which may lead to unfeasible path because of some adaptation functions which could not match along the path. Hence, both nodes can't communicate together using their protocol technologies.

SUMMARY OF THE INVENTION

It is an object of the invention to provide a method for building a path between a source node and a destination node for a network system, under adaptation functions using an ant colony, which permits to build a feasible path according to adaptive constraints.

To this end, there is provided a method for building a path between a source node and a destination node for a network system, under adaptation functions using an ant colony, said method comprising the steps of:

- for each ant of the colony :
- building a path between the source node and the destination node according to a selecting probability which is based on pheromone factors and heuristic factors associated to edges and/or nodes, a path comprising a sequence of nodes and edges ;
- updating an associated set of words with label(s) of the ant's built path, at least one label being associated to each edge or each node of said built path, said label(s) belonging to an alphabet representing technologies and adaptation functions supported by edges and/or nodes of the network system;
- selecting the best ant according to :
- an optimization criterion which is defined by adaptation functions according to an adaptation functions checking, said adaptation functions checking being based on the associated set of words of a built path using a push-down automaton, said push-down automaton comprising a stack and associated stack commands, said alphabet, states and transitions which labels of the alphabet are associated to;
- updating pheromone factors associated to the ants' built paths according to optimization criterions of the best ant and of the other ants, said optimization criterions being defined by adaptation functions according to an adaptation functions checking for said built paths.

As we will see in further details, as the selection of the best ant and the updating of the pheromone factors takes into account the adaptation functions, while said adaptation functions are checked, the built path will be feasible under the adaptation functions. If no path is feasible, said adaptation functions are not compatible, no best ant is selected and pheromone factors are not updated.

Moreover, the use of a push automaton will permits to check the adaptation functions during the building of a path and at the end of the building of the path.

In a first not limited embodiment, the preceding steps are performed for a determined number of cycles. A high number of cycles increases the chance of the ants to converge to an optimal path, said optimality being determined according to an optimization criterion.

In a second not limited embodiment, the step of building a path for an ant comprises the sub-steps of:

- from the source node
- choosing an egress edge of the node according to the selecting probability which is based on pheromone factors and heuristic factors associated to edges and/or nodes ;
- updating the path with the chosen egress edge and with the next egress node;
- selecting the egress node of the egress edge chosen;
- iterating the preceding steps with the selected egress node until the egress node selected is the destination node.

It permits to go along some nodes of the network system according to pheromone factors and heuristic factors already lay-down by the preceding ants of the colony.

In a third not limited embodiment, the step of updating the set of words is performed with label(s) of the egress node selected.

It permits to build the set of words associated to the path built by an ant.

In a fourth not limited embodiment, the step of updating the pheromone factors comprises the sub-step of:

- updating the pheromone factor associated to each chosen egress edge and/or to each selected egress node of a built path, according to
- a previous pheromone factor of the egress edge and/or of the egress node chosen, weighed by an evaporation rate ; and
- the difference between the optimization criterion values of the best ant and of the other ants of the colony which have selected the considered edge and/or node, according to the adaptation functions checking based on their associated sets of words respectively.

It permits to take into account the experience learnt by the colony and to take into account the adaptation functions or the QoS associated to the colony.

In a fifth not limited embodiment, the maximum selecting probability between the selecting probabilities associated to each egress edge of a node is chosen.

It permits to choose a best egress edge.

In a sixth not limited embodiment, the selecting probability of an egress edge is computed using the product of the pheromone factor and the heuristic factor of the egress edge divided by the sum of said pheromone factors and said heuristic factors on all the egress edges of a node, said pheromone factors and said heuristic factors being weighed respectively by a determined parameter.

It permits to take into account the experience of the colony and the quality of the nodes.

In a seventh not limited embodiment, the heuristic factor is determined using a number of words in the set of words associated to the ant and validated by an adaptation functions checking.

It permits to take into account the adaptation functions of the path.

In an eight not limited embodiment, the method further comprises a step of computing a cumulative quality of service with at least one quality of service parameter associated to the chosen egress edge and/or at least one quality of service parameter associated to the egress node of said chose egress edge.

It permits to obtain a cumulative quality of service along the path built by an ant. Using a cumulative representation of quality of service avoids the disclosure of intermediate quality of service (quality of service of previous selected edges).

In a ninth not limited embodiment, the heuristic factor is determined using the optimization criterion value when the cumulative quality of service parameter plus the quality of service parameter of the selected egress edge and/or of the egress node of said selected egress edge respect an end-to-end required quality of service parameter threshold, otherwise is determined using the inverse optimization criterion value.

It permits to compute a feasible path which satisfies a set of quality of service parameters.

In a tenth not limited embodiment, the heuristic factor is the sum of:

- the number of words in the set of words associated to the ant a and validated by an adaptation functions checking; and

- for all end-to-end required quality of service parameters, a ratio between :
- the required end-to-end quality of service parameter threshold; and
- a sum of the quality of service parameter value associated to the chosen egress edge and to the egress node and the cumulative quality of service value of the built path.

It permits to compute a feasible path which satisfies a set of quality of service parameters and which is feasible according to adaptation functions.

In an eleventh not limited embodiment, the optimization criterion is the lowest number of adaptation functions.

It permits to find a path which minimizes the number of adaptation functions. Therefore, it permits to obtain a path for which the time processing for encapsulation/desencapsulation is minimal.

In a twelfth not limited embodiment, the adaptation functions checking comprises the sub-steps of:

- launching a push-down automaton for reading a word associated to a path built between a source node and an another node, a word comprising labels of the alphabet, a label of a word being associated to an edge or a node of the built path ; and
- validating the built path according to the result of the reading of the word and to the state of a stack of said push-automaton, said stack being modified during the reading of the word, said validation comprising the sub-steps of:
- when the word has been read entirely and the another node is different from a destination node, validating the path being built with the adaptation functions corresponding to the word read ;
- when the word has been read entirely and the another node is equal to a destination node:
- if the source node and the destination node are of homogeneous technologies and if the stack is empty, validating the path with the adaptation functions corresponding to the word read ;
- if the source node and the destination node are of heterogeneous technologies and if the stack comprises a label representative of an adaptation function, validating the path with the adaptation functions corresponding to the word read.

It is a simple way to verify adaptation functions according to the path built by an ant. And, it permits to verify adaptation functions of an intermediate path, and adaptation functions of a final path.

In a thirteenth not limited embodiment, the push-down automaton comprises:

- a stack and associated stack commands ;
- the alphabet of labels representing technologies and adaptation functions supported by edges and/or nodes of the network system;
- states and transitions which labels of the alphabet are associated to;
- and is able to:
- read a label forming said word;
- check if there is a transition associated to the label read ;
- if an associated transition exists :
- activate stack commands on the stack according to conditions associated to the transition ;
- go to the egress state of the transition ; and
- iterate the preceding steps with the next label of the word.

The push-down automaton permits to check a word, fill in the stack, for a further validation/invalidation of the word.

In addition, there is provided a network management element for building a path between a source node and a destination node for a network system, under adaptation functions using an ant colony, a path comprising a sequence of nodes and edges, said network management element being able to:

- for each ant of the colony:
- build a path between the source node and the destination node according to a selecting probability which is based on pheromone factors and heuristic factors associated to edges and/or nodes, a path comprising a sequence of nodes and edges;
- update an associated set of words with label(s) of the ant's built path, at least one label being associated to each edge or each node of said built path, said label(s) belonging to an alphabet representing technologies and adaptation functions supported by edges and/or nodes of the network system;
- select the best ant according to :
- an optimization criterion which is defined by adaptation functions according to an adaptation functions checking, said adaptation functions checking being based on the associated set of words of a built path using a push-down automaton, said push-down automaton comprising a stack and associated stack commands, said alphabet, states and transitions which labels of the alphabet are associated to;

- update pheromone factors associated to the ants' built paths according to optimization criterions of the best ant and of the other ants, said optimization criterions being defined by adaptation functions according to an adaptation functions checking for said built paths.

BRIEF DESCRIPTION OF THE FIGURES

Some embodiments of methods and/or apparatus in accordance with embodiments of the present invention are now described, by way of example only, and with reference to the accompanying drawings, in which:

- Fig.1 illustrates a schematic network system comprising a source node and a destination node, where the method for building a path between said nodes according to the invention is to be used;
- Fig.2 illustrates a schematic organization chart of the method for building a path according to a not limited embodiment of the invention;
- Fig.3 illustrates a schematic organization chart of a first not limited embodiment of the method for building a path of Fig. 2;
- Fig.4 illustrates a schematic organization chart of a second not limited embodiment of the method for building a path of Fig. 2;
- Fig.5 illustrates schematically the details of a step of choosing an egress edge of a node of the method for building a path of Fig. 3 of Fig. 4;
- Fig.6 illustrates a schematic diagram of an adaptation functions checking used by the method for building a path of Fig. 2;
- Fig.7 illustrates a schematic diagram of a push-down automaton used by the adaptation functions checking of Fig. 6;
- Fig.8 illustrates a detailed schematic organization chart of the adaptation functions checking of Fig. 6;
- Fig.9 illustrates a schematic network system comprising network management elements which perform the method for building a path of Fig. 2, said network system being an intra domain system or an inter domain system;
- Fig.10 illustrates schematically in more details a source network management element, an intermediate network element, a destination network element within a network system, which are able to perform some steps of the method for building a path of Fig. 2, when said method is distributed;
- Fig.11 illustrates schematically in more details a network management element within a network system, which is able to perform the method for building a path of Fig. 2, when said method is centralized; and
- Fig.12 illustrates schematically in more details a network management element, within a network system, which is able to perform the adaptation functions checking of Fig. 8.

DESCRIPTION OF EMBODIMENTS OF THE INVENTION

In the following description, well-known functions or constructions by the man skilled in the art are not described in detail since they would obscure the invention in unnecessary detail.

The present invention relates to a method for building a path between a source node and a destination node for a network system, under adaptation functions using an ant colony.

As will be described hereinafter, the ant colony permits to search for an optimal path in a network system. The method for building a path is based on the behavior of ants seeking a path between a source node and a destination node. Upon finding a path, which is based on a probability of choosing edges based upon the experience (defined by the pheromone factors) of the colony A and the quality of nodes (defined by the heuristic factors) regarding QoS constraints, an ant lays down pheromones. If other ants find such a path, there are likely following said path and reinforcing it with their own pheromones (step of updating of pheromone factors as described later on). Moreover, the laid-down pheromones are also based upon adaptation functions, either during an intermediate a path (while finding a path), or when a final path has been found (the end-to-end path). Over time, however, the pheromones evaporate, thus reducing the attraction of the path.

About QoS constraints, the end-to-end path has to be built with respect to end-to-end QoS requirements Qr. Each QoS parameter qr of Qr is a numerical value representing an end-to-end threshold over a given parameter (e.g. delay).

In not limited examples, an end-to-end QoS parameter may be the bandwidth, or the end-to-end delay (the delay from the source node to the destination node). Such end-to-end required QoS parameter qr may be identified by a normalized index or characters id(qr), in not limited examples.

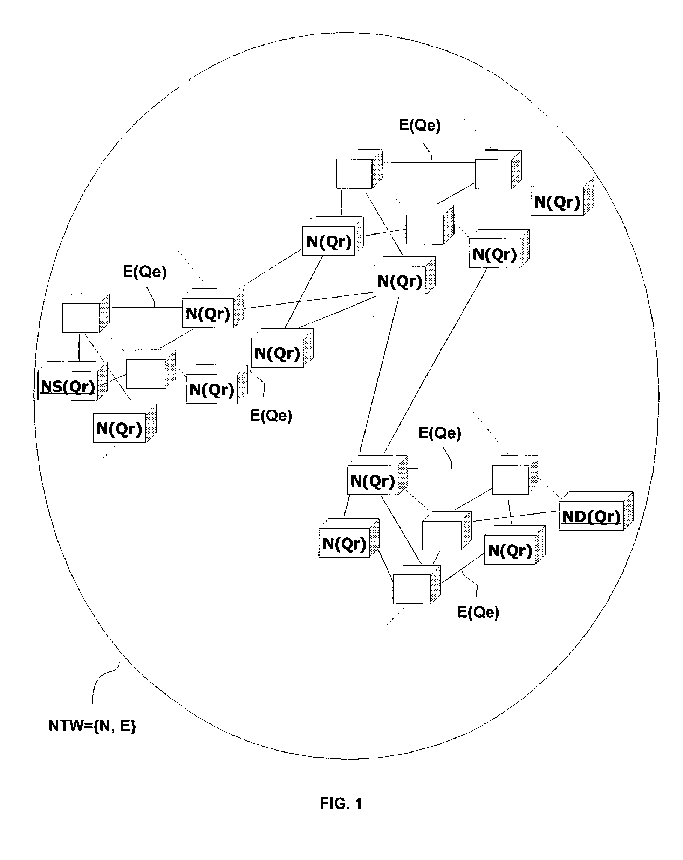

A network system NTW={N, E}, as illustrated in Fig.1 is composed of a set of nodes N and a set of edges E representing in a not limited example routers and links respectively.

Each node is associated to:

- a set of QoS parameters Q(Ne). In not limited examples, QoS parameters associated to a node are the availability of a node, the bandwidth of a node, the number of data packet lost on a node, a security level on a node, the delay between two nodes, the jitter which is the difference of delays between the source node and the destination node etc.
- a set of labels l($\pi$) representing the adaptation functions supported by a node ;
- an optimization criterion $\varphi$ that can capture different values.

Each edge e belonging to the set of edges E is associated to:

- a set of QoS parameters Qe;
- an optimization criterion $\varphi$.

In a not limited embodiment, a set of labels l($\pi$) representing the adaptation functions supported by an edge is further associated to said edge.

It is to be noted that the adaptation functions are supported by nodes N and/or edges of the network system NTW, depending of a choice of model taken for the network system NTW.

It is also to be noted that a built path $\pi$ is a sequence of edges E and nodes N between the source node NS and the destination node ND.

An ant a is defined by:

- A sequence of nodes and edge of a path built $\pi a$ by an ant a.
- A set of QoS parameters Qa where each q($\pi a$) (also called q(a)) $\in$ Qa represents the cumulative QoS value of the built path $\pi$ (said built path being intermediate or final) for a given end-to-end QoS parameter Qr.

In a not limited example, if the QoS parameter Qr represents the bandwidth, q($\pi a$) = min q(e), where e is an edge belonging to the path $\pi a$ built by the ant a.

In another not limited example, if the QoS parameter qr represents the delay, $q(\pi a) = \sum_{e \in \pi a} q(e)$,

where e is an edge belonging to the path $\pi a$ built by the ant a.

- A set of distinct words W, where each word $\omega(\pi) \in$ W represents a sequence of labels l($\pi$). W is the enumeration of all distinct label sequences generated using $\pi a$.

The nodes N described in a not limited example are routers. Thus, when a router NS (called a source node or here a source router) wants to transmit some data to router ND (called a destination node or here a destination router), a method M for building a path between the source node NS and the destination node ND is used.

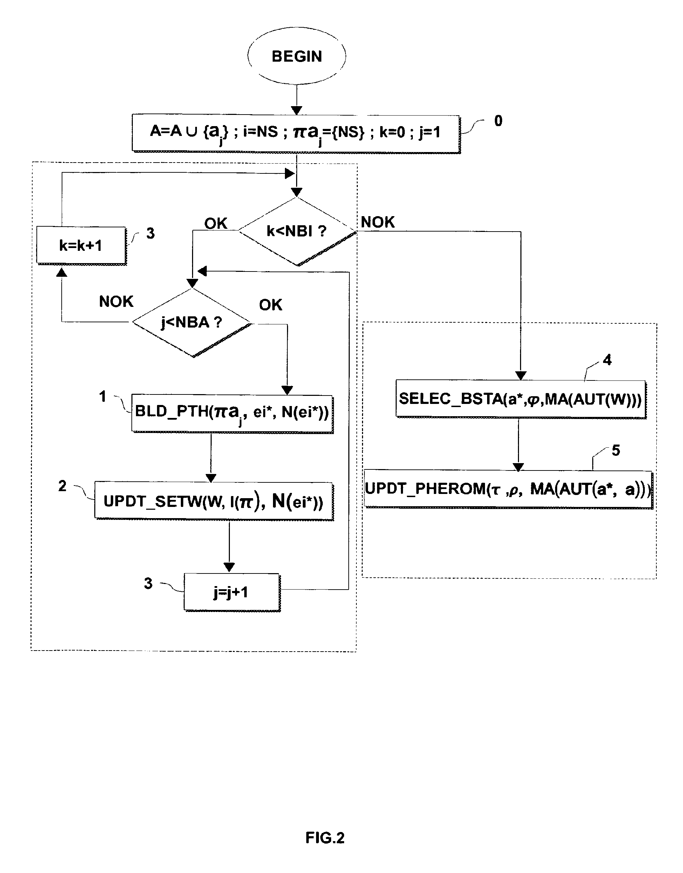

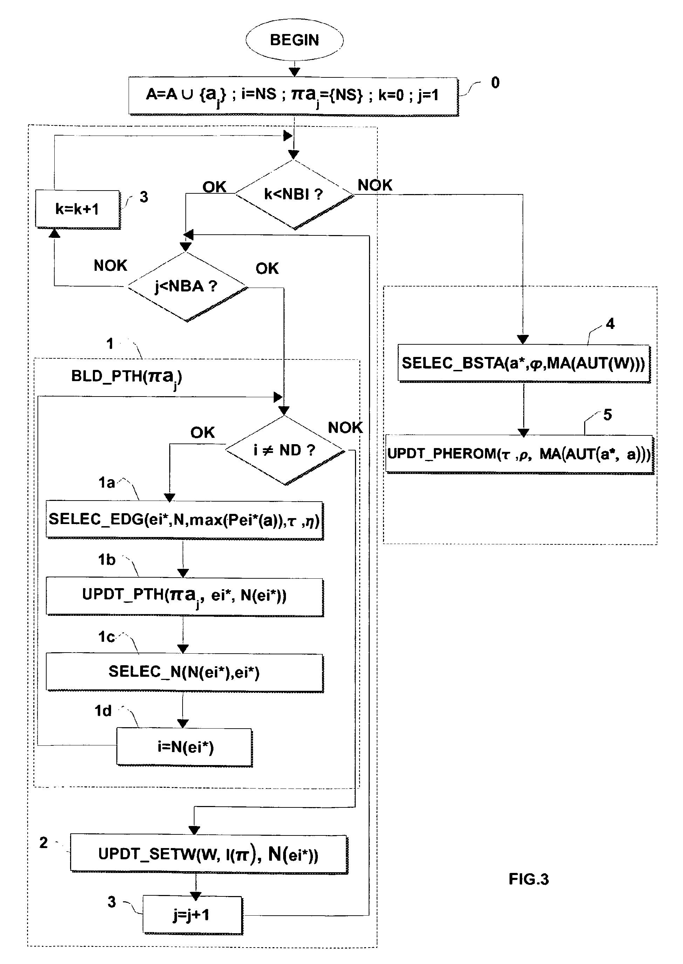

The method M for building a path $\pi$ between a source node NS and a destination node ND for a network system NTW, under adaptation functions using an ant a colony A, comprises the following steps as illustrated in Fig. 2 and Fig. 3:

- for each ant a of the colony A :
- building a path $\pi$ between the source node and the destination node according to a selecting probability $P_{ei}*(a)$ which is based on pheromone factors $\tau$ and heuristic factors $\eta$ associated to edges and/or nodes, a path $\pi$ comprising a sequence of nodes N and edges E (step BILD_PTH($\pi a j$, ei*, N(ei*))) ;

- updating an associated set of words W with label(s) of the ant's built path, at least one label l($\pi$) being associated to each edge or each node of said built path $\pi$, said label(s) belonging to an alphabet $\Sigma$ representing technologies tck and adaptation functions supported by edges and/or nodes of the network system NTW (step UPDT_SETW(W, l($\pi$), N(ei*));
- selecting the best ant a* according to (step SELECT_BSTA(a*,$\varphi$, MA(AUT(W)))) :
- an optimization criterion $\varphi$ which is defined by adaptation functions according to an adaptation functions checking, said adaptation functions checking being based on the associated set of words W of a built path $\pi$ using a push-down automaton AUT, said push-down automaton AUT comprising a stack STK and associated stack commands $\Phi$, said alphabet $\Sigma$, states st and transitions tr which labels l($\pi$) of the alphabet $\Sigma$ are associated to;
- updating pheromone factors ($\tau$) associated to the ants' built paths ($\pi$) according to optimization criterions of the best ant (a*) and of the other ants (a), said optimization criterions being defined by adaptation functions according to an adaptation functions checking for said built paths (π) (step UPDAT_PHEROM(τ, ρ, MA(AUT(a*,a)))).

In a not limited embodiment, the preceding steps are performed for a determined number of cycles NBI. It permits to converge to an optimum path.

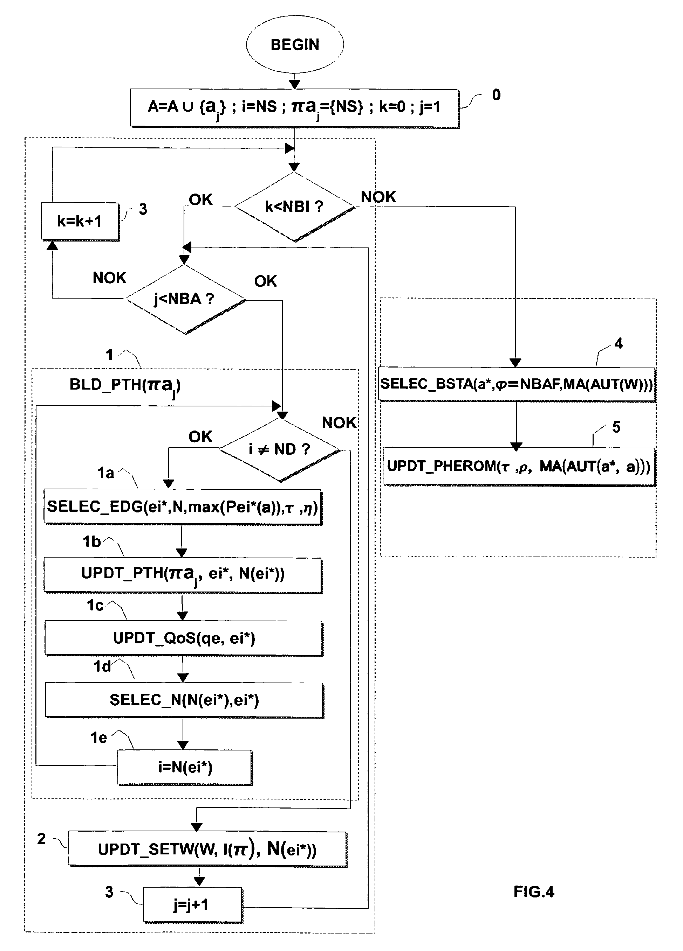

In a not limited embodiment, as illustrated in Fig. 3 and Fig. 4, the step of building a path for an ant a comprises the sub-steps of:

- from the source node NS
- choosing an egress edge ei* of the node i according to a selecting probability $P_{ei*}(a)$ which is based on pheromone factors τ and heuristic factors η associated to edges and/or nodes (step SELEC_EDG(ei*, N, max(Pei*(a)), τ, η);
- updating the path with the chosen egress edge ei* and a next egress node N(ei*) (step UPDT_PTH(πaj, ei*, N(ei*));
- selecting the egress node N(ei*) of the egress edge chosen ei* (SELEC_N(N(ei*, ei*));
- iterating the preceding steps until the egress node selected N(ei*) is the destination node ND ;

In not limited embodiment, the step of updating the set W of words ω(π) is performed with label(s) of the egress node N(ei*) selected.

In a not limited embodiment, the method M further comprises a step of computing a cumulative quality of service QoS with at least one quality of service parameter qe associated to the chosen egress edge ei* (step UPDT_QoS(qe, ei*) as illustrated in Fig. 4).

The building method M is described in details below.
In the following description, in the not limited embodiment described, the building method comprises the further steps above-mentioned.
Reference to Fig. 4 will be made.

**In an initialization step 0),** as illustrated in Fig. 4, one initializes:

- a first counter m to one for counting the number of ants in the colony A
- a first path πa1 with the source node NS associated to the first ant a1 of the colony A;
- an identification node i to the source node NS ; and
- a set of words W to the labels of the source node NS.

In a not limited embodiment, one initializes a second counter k to a determined number of cycles NBI. In a not limited embodiment, the determined number of cycles NBI is at least equal to two.

Thus, the method M for building a path begins from the source node NS and from the first ant a1 of the ant colony A.

In a first not limited embodiment, one initializes also the pheromone factor τ of the first ant a1 to adaptation functions associated to the source node NS. In a second not limited embodiment, one initializes also the pheromone factor τ of the first ant a1 to the QoS parameters associated to the source node NS.

Of course, in a third not limited embodiment, both above embodiments may be used in combination for the initialization of the pheromone factor τ.

**In a first step 1),** as illustrated in Fig. 4, for each ant a of the colony A, from the source node NS, one builds a path between the source node and the destination node, a path π comprising a sequence of nodes N and edges E.

Said step comprises the following sub-steps.

From the source node NS, *in a first sub-step 1a),* one chooses an egress edge ei* of the node i, here i=NS, according to a selecting probability $P_{ei}*(a)$ which is based on pheromone factors τ and heuristic factors η associated to edges and/or nodes.

In a not limited example, the pheromone factor τ of the egress edge ei* chosen and/or of the node i is used.

It is to be reminded that the pheromone factors permit to take into account the experience learnt by the colony A, and the heuristic factors permit to define the quality of a node (the interest to select said node) in relation to defined constraints.

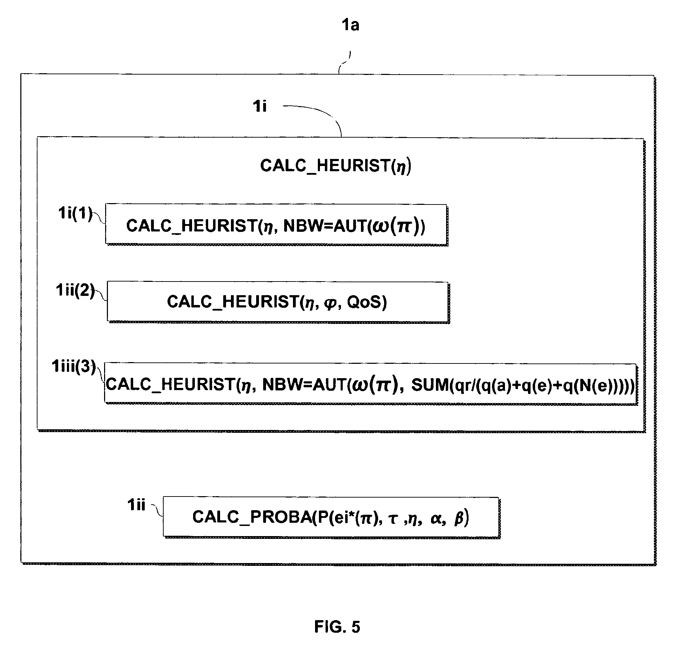

Thus, in this first sub-step, one computes heuristic factors η associated to edges and/or nodes (step CALC_HEURIST(η) as illustrated in Fig. 5), and then one calculates the selecting probability $P_{ei}*(a)$ (sub-step CALC_PROBA (P(ei*(π), τ, η, α ,β)) illustrated in Fig. 5). These steps are described in more details hereinafter.

**1i)** Computation of an heuristic factor η

In a first not limited embodiment (illustrated in Fig. 5 as sub-step 1i(1):CALC_HEURIST(η, NBW=AUT(ω(π)))), the heuristic factor η is determined using the number of words (ω(π) in the set of words W associated to the ant and validated by an adaptation functions checking MA. It permits to take into account the adaptation functions.

Hence, one has: $\eta_e(a) = NBW = \sum_{\omega(\pi) \in W} AUT(\omega(\pi))$ , where NBW is the number of words ($\omega(\pi)$) validated by the push-automaton AUT and associated to the path of the ant a.

It is to be noted that the adaptation functions checking MA will be described later as well as the set of words W.

In a second not limited embodiment (illustrated in Fig. 5 as sub-step 1ii(2): CALC_HEURIST($\eta$, $\varphi$, QoS)), the heuristic factor $\eta$ is determined using the optimization criterion value $\varphi$ when the cumulative quality of service parameter q(a) plus the quality of service parameter of the selected egress edge q(e) and/or of the egress node q(N(e)) of said selected egress edge ei* respect an end-to-end required quality of service parameter threshold qr, otherwise is determined using the inverse optimization criterion value $\varphi$.

It is to be noted that one takes into account the optimization criterion instead of the QoS constraints in the value of the heuristic factor.

It is to be reminded that qr $\in$ Qr, with Qr being the set of end-to-end required QoS parameters on the whole end-to-end built path (from the source node to the destination node).

Hence, one has:

$$\eta_e(a) = +\varphi(e)$$

if

$$q(a) + q(e) + q(N(e)) \le qr$$

otherwise:

$$\eta_e(a) = -\varphi(e)$$

It permits also to penalize the nodes which do not satisfy the QoS constraints or on the contrary to favor those which satisfy the QoS constraints.

In a third embodiment (illustrated in Fig. 5 as sub-step 1iii(3) :CALC_HEURIST($\eta$, NBW=AUT($\omega(\pi)$), SUM(qr/ (q(e)+q(a)+q(N(e)))))), the heuristic factor $\eta$ is the sum of:

- the number of words $\omega(\pi)$ in the set of words W associated to the ant a and validated by an adaptation functions checking MA ; and
- for all end-to-end required quality of service parameters id(qr), a ratio between :
- the required end-to-end quality of service parameter threshold qr; and
- a sum of the quality of service parameter value q(e), q(N(e)) associated to the chosen egress edge ei* and to the egress node N(ei*) and the cumulative QoS value q(a) of the built path $\pi$.

It permits to take into account the adaptation functions and the quality service parameters.

Hence, one has:

$$\eta_e(a) = NBW + \sum_{qr \in Qr} \frac{qr}{q(a) + q(e) + q(N(e))}$$

If $\dfrac{qr}{q(a) + q(e) + q(N(e))} \ge 1$ , this means that the QoS ratio is good, otherwise, this means that the QoS ratio is bad.

**1ii)** <u>Calculation of the probability P<sub>ei*</sub>(a).</u>

In a not limited embodiment, the maximum selecting probability max($P_{ei}$*(a)) between the selecting probabilities $P_{ei*}$(a) associated to each egress edge ei* of a node is chosen.

It permits to select the egress edge ei* which has the maximum probability, i.e. which improves the more the built path π.

In a not limited embodiment, a selecting probability $P_{ei*}$(a) of an egress edge ei* is computed using the product of the pheromone factor τ and the heuristic factor η of the egress edge ei* divided by the sum of said pheromone factors τ and said heuristic factors η on all the egress edges of a node i, said pheromone factors τ and said heuristic factors η being weighed respectively by a determined parameter ∝, β.

Hence, one has:

$$P_{ei*}(aj) = \frac{(\tau_{ei*}(aj)^{\alpha}.\eta_{ei*}(aj)^{\beta})}{\sum_{e \in Ei} \tau_e(aj)^{\alpha}.\eta_e(aj)^{\beta}} \qquad [1]$$

In a not limited example, ∝=2, and β=5.

*In a second sub-step 1b),* as illustrated in Fig. 4, one updates the path π for the ant a with the chosen egress edge ei* and with the next egress node N(ei*).

It permits to save the built path for the later delivery of a service between the source node NS and the destination node ND. It is to be noted that to each node, an IP address or a NAS (Network Access Server) address is attached as usual and is thus saved.

It permits also to have the addresses of the nodes when one updates the pheromone factors τ.

*In a third sub-step 1c),* as illustrated in Fig. 4, one computes a cumulative quality of service q(a) with at least one quality of service parameter q(e) associated to the chosen egress edge ei* and/or at least one quality of service parameter q(N(e)) associated to the egress node N(ei*).

It avoids publishing the intermediate QoS which are supported by each node and/or edge of the network system NTW, those intermediate QoS being often confidential.

It is to be noted that a plurality of QoS parameters q(e) may be associated to the chosen egress edge ei*. The same applied for the egress node N(ei*).

*In a fourth sub-step 1d),* as illustrated in Fig. 4, one selects the egress node N(ei*) of the egress edge chosen ei*.

Thus, the ant a is moving along some nodes of the network system NTW.

*In a fifth sub-step 1e),* as illustrated in Fig. 4, one iterates the preceding sub-steps 1a to 1e with the selected egress node N(ei*) until the egress node selected N(ei*) is the destination node ND.

In practice, the identification node i is set to the next egress node N(ei*).

At the end of these steps, one obtains one path π for an ant a of the colony A.

**In a second step 2),** as illustrated in Fig. 4, one updates a set W of words ω(π) with label(s) of the ant's built path π, at least one label l(π) being associated to each edge or each node of said built path π, said labels l(π) belonging to an alphabet Σ representing technologies and adaptation functions supported by edges and/or nodes of the network system NTW.

It is to be noted that as a path π built between a source node NS and another node NI is a sequence of edges E and nodes N between these two nodes NS and NI, a word ω(π) may be built using the labels l(π) on the edges and/or the nodes belonging to said path π. Since a plurality of adaptation functions may be associated to a node and/or an edge, a path π might leads to a set of words W.

In a not limited embodiment, the step of updating the set of words W is performed with label(s) of the egress node N(ei*) selected.

Hence, each time an ant a is "moving" to an egress node N(ei*) of a chosen egress edge ei*, the adaptation functions associated to said egress node N(ei*) are registered as labels l(π) within the set of words W associated to the ant a.

In a not limited embodiment, the updating is performed as one goes along with the first step 1). Hence, each time an egress node N(ei*) is selected, the set of words W is updated with label(s) of said egress node N(ei*).

**In a third step 3),** when the path π for an ant a has been found, as above-mentioned, one iterates all these steps for each ant a of the colony A. In practice, the first counter j is increased one by one for each ant, until j equal to the number of ant NBA.

In a not limited example, the number of ants NBA = 10.

Hence, one obtains a path π for each ant a of the colony A.

Therefore, when the path π of each ant a has been built, **in a fourth step 4),** as illustrated in Fig. 4, one selects the best ant a* according to:

- an optimization criterion φ which is defined by adaptation functions according to an adaptation functions checking MA for the built path π, said adaptation functions checking being based on the associated set of words W using a push-down automaton AUT, said push-down automaton AUT comprising a stack STK and associated stack commands Φ, said alphabet ∑, states st and transitions tr which labels l(π) of the alphabet ∑ are associated to.

This step comprises the sub-steps of:

- computing a optimization criterion φ for each ant a of the colony A. Therefore, each set of words of an ant's built path is proceeded by the push-down automaton AUT.
- selecting the best ant a*, which is the ant in the colony A whose optimization criterion φ is the best among all the optimization φ criterions computed before.

In a not limited embodiment, the optimization criterion φ is the lowest number of adaptation functions within a word ω(π) which has been validated. It permits to chose the word ω(π) which uses the lowest number of adaptation functions, as the use of adaptation functions is costly in term of time consuming and memory consuming.

Moreover, it permits to avoid multiple chains of encapsulation/desencapsulation, as will be explained later in the description of the push-down automaton AUT.

In this not limited embodiment, the best ant a* is the ant whose optimization criterion has the lowest number of adaptation functions among the other ants.

In a not limited embodiment, the optimization criterion φ is further defined with a cumulative quality of service q(a) with at least one quality of service parameter q(e) associated to the chosen egress edge ei* and/or at least one quality of service parameter q(N(e)) associated to the egress node N(ei*) of said chose egress edge ei*.

Of course, a plurality of quality of service parameters may be associated to a chosen egress edge ei*.

Said cumulative QoS has been updated in the third sub-step 1c) described before.

Thus, the optimization criterion φ takes into account adaptive constraints and QoS constraints.

**In a fifth step 5),** as illustrated in Fig. 4, one updates pheromone factors τ associated to the ants' built paths π according to optimization criterions of the best ant a* and of the other ants a, said optimization criterions being defined by adaptation functions according to an adaptation functions checking for said built paths π.

Hence, for each loop k, one updates the pheromones factors on edges and/or nodes of each path found by an ant. Said path is the end-to-end path found.

More particularly, in a not limited embodiment, one updates the pheromone factor τ associated to each chosen egress edge ei* and/or to each selected egress node N(ei*) of a built path π, according to :

- a previous pheromone factor τ of the egress edge ei* and/or of the egress node Nei* chosen, weighed by an evaporation rate p ; and
- the difference between the optimization criterion values of the best ant a* and of the other ants a of the colony A which have selected the considered edge and/or node, according to the adaptation functions checking based on their associated sets of words W respectively.

It is to be noted that the difference between the optimization criterion values of the best ant a* and of the other ants a of the colony A is a sum of differences. It means that one performs:

- the difference between the optimization criterion value of the best ant a* and the optimization criterion value of the first other ant a of the colony A, which has selected the considered edged and/or node (before the updating of the pheromone factors);
- the difference between the optimization criterion value of the best ant a* and the optimization criterion value of the second other ant a of the colony A, which has selected the considered edged and/or node (before the updating of the pheromone factors);
- the difference between the optimization criterion value of the best ant a* and the optimization criterion value of the third other ant a of the colony A, which has selected the considered edged and/or node (before the updating of the pheromone factors);
- etc;

and one sums all these differences obtained.

Thus, on has:

$$\tau_e = (1-\rho)\tau_e + \sum_{a\in A} \frac{1}{\varphi_{a*} - \varphi_a}$$

Hence, the previous pheromone factors on the different edges and/or node of the built path which have been laid down by the ant in the previous loop (NBI) are taken into account.

It permits to take into account the experience learnt by the colony A.

It is to be noted that the evaporation rate avoids a convergence to a locally optimal path. Without such an evaporation rate, the paths chosen by the first ants would be too attractive to the following ants. Hence the exploration of paths within the network system would be constrained.

It is also to be noted that an ant a may laid down a pheromone factor on an egress edge or an egress node, or both edge and node, depending on the model one wants to consider for the ant loops NBI.

Thus, in a not limited variant of said embodiment, one has:

$$\tau_e = (1-\rho)\tau_e + \sum_{a\in A} \frac{1}{\sum_{\omega_{a*}\in Wa*} AUT(\omega_{a*}) - \sum_{\omega_a\in Wa} AUT(\omega_a)}$$

with :

- Wa* being the set of words associated to the best ant a*;
- Wa the sets of words associated to the other ants a;
- AUT(ωa*) returning the number of words NBW validated by said adaptation functions checking for the built path of the best ant a*;
- AUT(ωa) returning the number of words NBW validated by said adaptation functions checking for the built path of an ant a different from the best ant a*.

Thus, the more pheromone factors the edges or the nodes have, the more feasible paths π they will lead to.

It is to be noted that in a not limited embodiment, the steps 1) to 5) above-described are performed for a determined number of cycles NBI. This loop permits for each ant a to explore a plurality of paths. Hence, at the end of this loop, one obtains the best ant a*, and therefore the best path, among all the ants a which respects the optimization criterion φ and which lead to a feasible path π according to adaptation functions. Hence, one converges to an optimal path.

**Adaptation functions checking MA.**

The adaptation functions checking MA will now be described hereinafter. It permits to check a path built between a source node NS and another node NI according to adaptation functions.

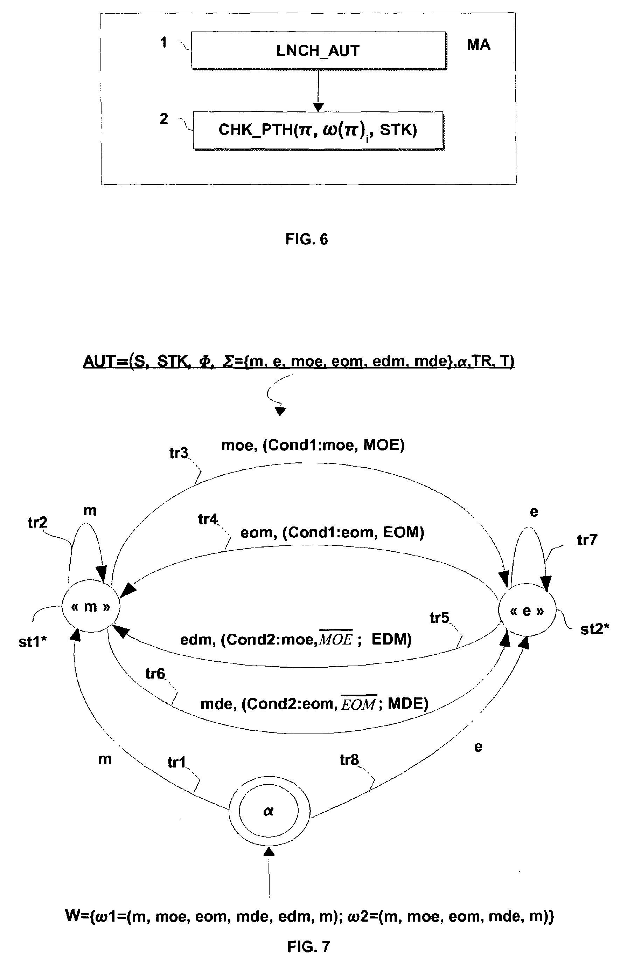

Reference to Fig. 6, 7 and 8 will be made.

The adaptation functions checking MA comprises the following steps, as illustrated in Fig. 6:

- launching a push-down automaton AUT for reading a word ω(π) associated to the built path π, a word π(π) comprising labels l(π) of the alphabet Σ representing technologies tck and adaptation functions supported by edges and/or nodes of the network system NTW, a label l(π) of a word ω(π) being associated to an edge E or a node N of the built path π (step LNCH_AUT); and
- validating the built path π according to the result of the reading of the word ω(π) and to the state of a stack STK of said push-automaton AUT, said stack STK being modified during the reading of the word ω(π) (step CHK_PTH(π, ω)(π),STK).

It is to be noted that the technologies and adaptation functions are supported by nodes N and/or edges of the network system NTW, depending of a choice of model taken for the network system NTW.

It is also to be noted that the labels may be associated to an edge or to a node of the built path, depending of a choice of model taken for the push-down automaton.

As a path $\pi$ built between a source node NS and another node NI is a sequence of edges E and nodes N between these two nodes NS and NI, a word $\omega(\pi)$ may be built using the labels $l(\pi)$ on the edges or the nodes belonging to said path $\pi$. Since several adaptation functions may be associated to a node and/or an edge, a path $\pi$ might leads to a set of words W. Therefore in a not limited embodiment, a set of words W is read.

In the following description, protocols such as MPLS ("Multiprotocol Label Switching "), labeled "m" and Ethernet, labeled "e", are taken into a not limited example. The associated adaptation functions are:

- MPLS over Ethernet, labeled "moe", where the MPLS protocol is encapsulated in the Ethernet protocol ;
- Ethernet over MPLS, labeled "eom", where the Ethernet protocol is encapsulated in the MPLS protocol;
- Ethernet from MPLS, which is the inverse adaptation function of "moe", labeled "edm", where the Ethernet protocol is desencapsulated in the MPLS protocol ;
- MPLS from Ethernet, which is the inverse adaptation function of "eom", labeled "mde", where the MPLS protocol is desencapsulated from the Ethernet protocol.

It is to be noted that the adaptation functions checking MA may be used for checking an intermediate path or a final path.

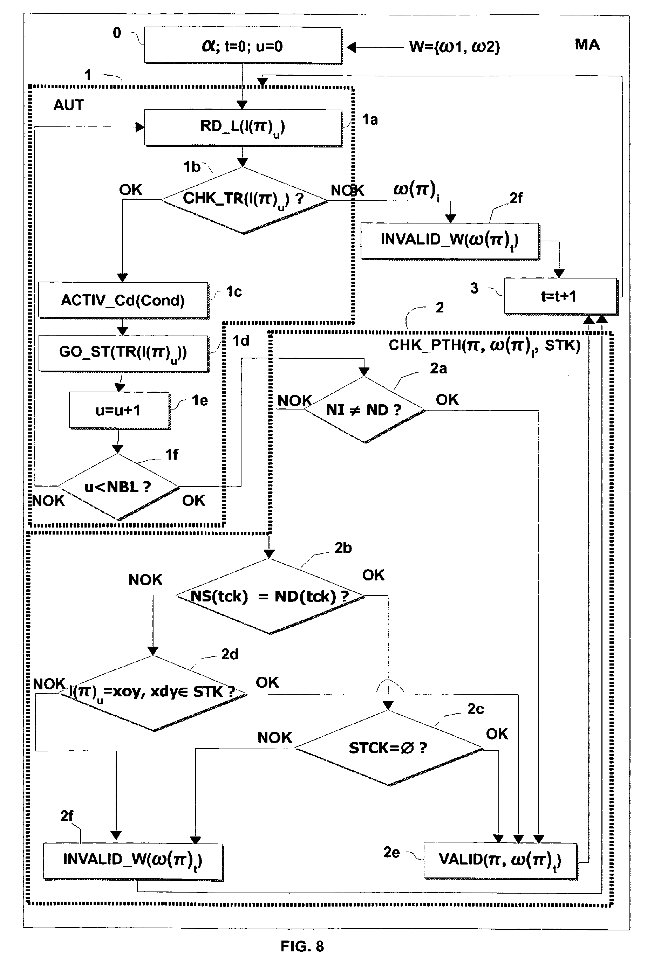

An intermediate path is a path being built between the source node NS and another node NI, said other node NI being in this case an intermediate node between the source node NS and a destination node ND to which a service has to be delivered. An intermediate path is therefore a part of a final path. Therefore, in this case, in a not limited embodiment, the validation of the built path $\pi$ comprises the sub-step of, as illustrated in Fig. 8:

- when the word ($\omega(\pi)$ has been read entirely (step 1f:OK) and the another node NI is different from a destination node ND (step 2a:OK), validating the path $\pi$ being built with the adaptation functions corresponding to the word read $\omega(\pi)$ (step 2e: VALID($\pi,\omega(\pi)_t$)).

The checking of an intermediate path permits to stop the building of a path if one realizes that the intermediate node will not be able to communicate with the source node according to their protocols.

Therefore, the adaptation function checking MA may be used in the computation of the heuristic factor $\eta$ as described before, i.e. during the updating of a path $\pi$.

A final path is the end-to-end path between the source node NS and another node NI, said other node NI being in this case the destination node ND to which a service has to be delivered.

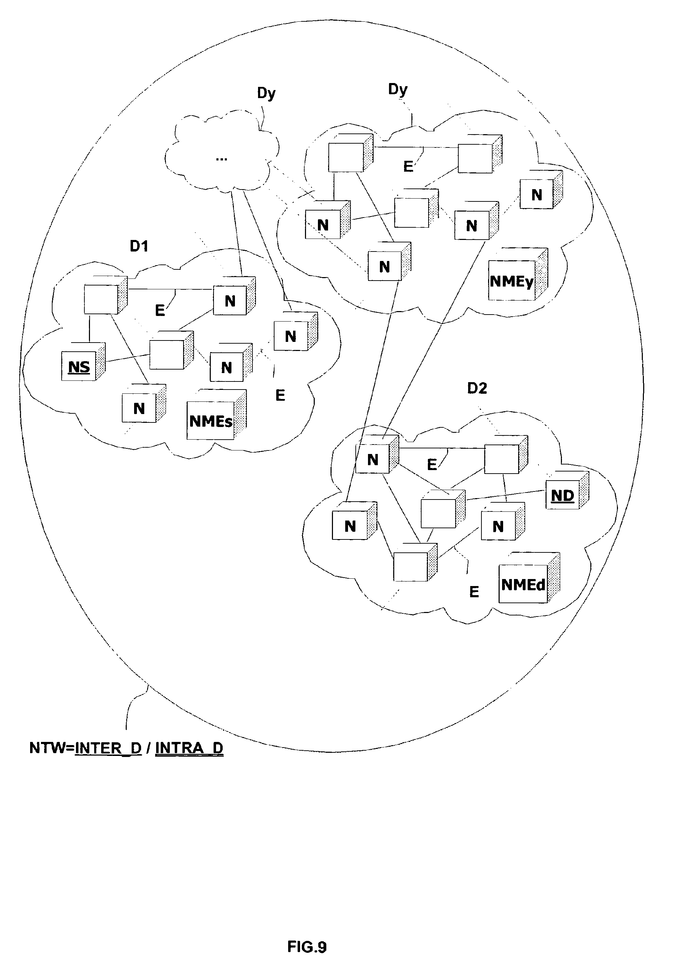

Therefore, in this case, in a not limited embodiment, the validation of the built path $\pi$ further comprises the sub-steps of, as illustrated in Fig. 9:

- when the word $\omega(\pi)$ has been read entirely (step 1f:OK) and the another node NI is equal to a destination node ND (step 2a:NOK) :
- if the source node NS and the destination node ND are of homogeneous technologies tck (step 2b:OK) and if the stack STK is empty (step 2c:OK), validating the path $\pi$ with the adaptation functions corresponding to the word read $\omega(\pi)$ (step 2e: VALID $(\pi,\omega(\pi)_t)$) ;
- if the source node NS and the destination node ND are of heterogeneous technologies tck (step 2b:NOK) and if the stack STK comprises a label representative of an adaptation function xoy, xdy (step 2d:OK), validating the path $\pi$ with the adaptation functions corresponding to the word read $\omega(\pi)$ (step 2e: VALID($\pi,\omega(\pi)_t$)).

In a not limited embodiment, the top entry of the stack STK is tested. If his top entry is a label representative of an adaptation function xoy, xdy one validates the path $\pi$.

Therefore, the adaptation function checking MA may be used in the updating of the pheromone factors $\tau$ as described before, i.e. when a path has been found.

The adaptation functions checking MA is described in details below.

In the following, in the not limited embodiment described, the adaptation functions checking MA comprises the further steps and sub-steps above-mentioned.

Reference to the Figs. 7 and 8 will be made.

For the following detailed description, in a not limited example given, a set of words W (associated to the built path $\pi$ which is to be checked) is composed of two words $\omega1$ and $\omega2$ as following.

W = {$\omega1$ = (m, moe, eom, mde, edm, m) ; $\omega2$= (m, moe, eom, mde, m)}

**In an initialization step 0),** as illustrated in Fig. 8, one initializes a first and a second counters t and u to zero for counting respectively the number of words $\omega(\pi)$ forming the set of words W associated to the built path $\pi$, and the

number of labels l(π) within the set of words W.

As illustrated in Fig. 8, the adaptation functions checking MA starts from the initial state α and takes as an input the set of words W.

**In a first step 1),** as illustrated in Fig. 8, one launches a push-down automaton AUT for reading a word ω(π) associated to the built path π, a word ω(π) comprising labels l(π) of the alphabet Σ representing technologies tck and adaptation functions supported by edges and/or nodes of the network system NTW, a label l(π) of a word ω(π) being associated to an edge E or a node N of the built path π.

In the not limited example given, one reads the first word ω1 (t=0).

The push-down automaton AUT is described below.

• Push-down automaton AUT

A schematic diagram of a not limited embodiment of the push-down automaton AUT is illustrated in Fig. 7.

Such a push-down automaton AUT comprises:

- a stack STK and associated stack commands Φ ;
- the alphabet Σ of labels l(π) representing technologies and adaptation functions supported by edges E and/or nodes N of the network system NTW ;
- states st and transitions tr which labels l(π) of the alphabet Σ are associated to.

It also comprises an initial state α.

It is to be noted that the set of stack commands is named Φ and a stack command is named Cd.

In a not limited embodiment, the following stack commands Φ are associated to the stack STK:

- MOE which fills in the stack STK with a "moe" label ;
- EOM which fills in the stack STK with a "eom" label ;
- MDE which fills in the stack STK with a "mde" label ;
- EDM which fills in the stack STK with a "mde" label ;
- $\overline{MOE}$ which removes a "moe" label from the stack STK ;
- $\overline{EOM}$ which removes a "eom" label from the stack STK.

In a not limited embodiment, each state st but the initial state α is labeled with a label l(π) representing a technology tck used within a node and/or an edge of the network system NTW. In the not limited example taken, the technology tck used is the protocol supported by a node and/or an edge, here MPLS of Ethernet.

Hence, the push-automaton AUT may be noted as AUT = {S, STK, Σ, Φ, α , TR, T), where:

S is the set of states, S={α, "e", "m"};
Σ={m,e,meo,eom,edm,mde};
Φ the stack commands, Φ={MOE, EOM, MDE, EDM, $\overline{MOE}$ , $\overline{EOM}$};
TR is the set of transitions tr between the states; and
T={"e","m"} the terminal states.

In order to read a word ω(π), the push-down automaton AUT is able to, as illustrated in Fig. 8:

- read a label l(π) forming said word ω(π) (step 1 a: RD_L(l(π)$_u$)) ;
- check if there is a transition tr associated to the label read l(π) (step 1b:CHK_TR(l(π)$_u$)) ;
- if an associated transition tr exists (step 1 b:OK):
- activate stack commands Φ on the stack STK according to the conditions Cond associated to the transition tr (step 1c: ACTIV_Cd(Cond)) ;
- go to the egress state st* of the transition tr (step 1d:GO_ST(TR(l(π)$_u$))) ; and
- iterate the preceding steps with the next label l(π) of the word ω(π) (step 1e).

These sub-steps are described in detail below.

**In a first sub-step 1a),** as illustrated in Fig. 8, one reads a label l(π) forming said word ω(π).

In the not limited example given, one reads the first label "m" of the word ω1 (u=0).

**In a second sub-step 1b),** as illustrated in Fig. 8, one checks if there is a transition tr associated to the label read l(π).

In the not limited example given, there is one transition tr1 associated to the first label read "m" as illustrated in Fig. 7.

**In a third sub-step 1c),** as illustrated in Fig. 8, one activates stack commands $\Phi$ on the stack STK according to the conditions read Cond.

It is to be noted that for the initial state $\alpha$, no stack commands Cd are associated. Therefore, no stack command Cd is activated.

It is to be noted that activating stack commands leads to fill in the stack STK with a label $l(\pi)$ or to remove from the stack STK a label $l(\pi)$, as described hereinafter.

It is to be noted that the conditions Cond will be explained later in the description.

**In a fourth sub-step 1d),** as illustrated in Fig. 8, one goes to the egress state st* of the transition tr.

In the not limited example given, one goes to the egress state st1* ="m" as illustrated in Fig. 7.

**In a fifth sub-step 1e),** as illustrated in Fig. 8, one iterates the preceding sub-steps 1a) to 1d) with the next label $l(\pi)$ of the word $\omega(\pi)$.

In practical, the second counter u is increased by one.

In the not limited example given, the next label $l(\pi)$ of the word $\omega1$ is "moe" (u=1).

In the not limited example given, for this label "moe":

- there is one transition tr3 associated as illustrated in Fig. 7 (sub-step 1 b) ;
- a first condition Cond1 is associated to the transition tr3. This condition is that the label $l(\pi)$ labeling the transition tr3 is representative of an encapsulated adaptation function moe. Therefore, one activates a push command MOE which fills in the stack STK with the label "moe" (sub-step 1 c) ; and
- one goes to the egress state st2*="e" of the transition tr3 (sub-step 1 d).

The following table summarizes for the first word $\omega1$ the different labels read $l(\pi)$, the associated egress state st*, the state of the stack STK, the associated stack commands $\Phi$ activated.

| $\omega1$ = (m, moe, eom, mde, edm, m) |
| --- |
| $l(\pi)$ read = "m"; st1 *="m"; STK= $\{\varnothing\}$ |
| $l(\pi)$ read = "moe"; st2*="e"; Cd=MOE; STK= {moe} |
| $l(\pi)$ read = "eom"; st1 *="m"; Cd=EOM; STK= {eom,moe} |
| $l(\pi)$ read = "mde"; st1*="e"; Cd= $\overline{EOM}$ ;STK= {moe} |
| $l(\pi)$ read = "edm"; st1 *="m"; Cd= $\overline{MOE}$ ; STK= $\{\varnothing\}$ |
| $l(\pi)$ read = "m"; st1 *="m"; Cd=Ø; STK= {Ø} |

Hence, once the first word $\omega1$ is read by the push-automaton AUT, the stack STK is empty for the first word $\omega1$.

When all the labels $l(\pi)$ of the first word $\omega1$ have been proceeded by the push-down automaton AUT (when a corresponding transition tr exists as explained in step 1 b) (step 1f:OK; u=5<NBL=6), **in a second step 2),** one validates the built path $\pi$ according to the result of the reading of said word $\omega1$ and to the associated state of a stack STK of said push-automaton AUT, said stack STK being modified during the reading of the word $\omega(\pi)$ as described above.

The validation comprises the following sub-steps as illustrated in Fig. 8.

*In a first sub-step 2a:OK),* when a word $\omega(\pi)$ has been read entirely and the another node NI is different from the destination node ND, one validates the path $\pi$ being built with the adaptation functions corresponding to the word read $\omega(\pi)$.

It is to be noted that this sub-step is performed when the path $\pi$ is being built, i.e. when it is an intermediate path, as the another node NI is different from the destination node ND.

*In a second sub-step 2a:NOK),* when the word $\omega(\pi)$ has been read entirely and the another node NI is equal to the destination node ND, the following sub-steps are performed.

It is to be noted that this sub-step is performed when the path $\pi$ is a final path.

- If the source node NS and the destination node ND are of homogeneous technologies tck (sub-step 2b:OK) and if the stack STK is empty (sub-step 2c:OK), one validates the path $\pi$ with the adaptation functions corresponding to the word read $\omega(\pi)$ (sub-step 2e).
- If the source node NS and the destination node ND are of heterogeneous technologies tck (sub-step 2b:NOK) and if the stack STK comprises a label representative of an adaptation function xoy, xdy (sub-step 2d:OK), one validates the path $\pi$ with the adaptation functions corresponding to the word read $\omega(\pi)$ (sub-step 2e).

Hence, in the not limited example given of the word ω1 :

- a) If the built path π is an intermediate path.
  The first word ω1 has been read entirely. Therefore the built path π is validated with the adaptation functions corresponding to this word, that is to say, with the adaptation functions moe, eom, mde, edm. In this case, both nodes NS and ND could communicate using their corresponding protocols.
- b) If the built path π is a final path.

The first word ω1 has been read entirely.

o If the source node NS and the destination node ND are of homogeneous technologies, for example MPLS, as the stack STK is empty for the first word ω1, one validates the built path π with the first word ω1 only, and therefore with the corresponding adaptation functions moe, eom, mde, edm. In this case, both nodes NS and ND could communicate using their corresponding protocols.

o If the source node NS and the destination node ND are of heterogeneous technologies, for example MPLS and Ethernet respectively, as the stack STK is empty for the first word ω1, no validation of the built path π is performed with the first word ω1.

**In a third step 3),** one iterates the preceding steps 1 and 2 with said next word ω(π) of the set of words W, i.e. the second word ω2.

In practical, the first counter t is increased by one (t=1) and the second counter u is reinitialized to zero. Moreover, one starts from the initial state α.

The following table summarizes for the second word ω2 the different labels read l(π), the associated egress state st*, the state of the stack STK, the associated stack commands Φ activated.

| ω2= (m, moe, eom, mde, m) |
| --- |
| l(π) read = "m"; st1 *="m"; STK= {∅} |
| l(π) read = "moe"; st2*="e"; Cd=MOE; STK= {moe} |
| l(π) read = "eom"; st1*="m"; Cd=EOM; STK= {eom,moe} |
| l(π) read = "mde"; st1*="e"; Cd=EOM ; STK= {moe} |
| l(π) read = "m"; st1 *="m"; Cd=Ø; STK= {moe} |

Hence, once the second word ω2 is read by the push-automaton AUT, the stack STK is not empty for the second word ω2 but is fill in with the label moe.

When all the labels l(π) of the second word ω2 have been proceeded by the push-down automaton AUT (when a corresponding transition tr exists as explained in step 1 b) (step 1 f:OK; u=4<NBL=5), **in a second step 2),** one validates the built path π according to the results of the reading of said word ω2 and to the associated state of the stack STK.

The validation comprises the following sub-steps.

Hence, in the not limited example given of the word ω2:

- a) If the built path π is an intermediate path.
  The second word ω2 has been read entirely. Therefore the built path π is validated with the adaptation functions corresponding to this word, that is to say, with the adaptation functions moe, eom, mde.
- b) If the built path π is a final path.

The second word ω2 have been read entirely.

o If the source node NS and the destination node ND are of homogeneous technologies, for example MPLS, as the stack STK is not empty for the second word ω2, no validation of the built path π is performed with the second word ω2.

o If the source node NS and the destination node ND are of heterogeneous technologies, for example MPLS and Ethernet respectively, as the stack STK is filled in with the encapsulated adaptation function "moe" for the second word ω2, one validates the built path π with the second word ω2, and therefore with the corresponding adaptation functions moe, eom, mde.

It is to be noted that in a not limited embodiment, if there is no associated transition tr associated to the label read l(π) of a word ω(π), one iterates the preceding steps with the next word ω(π) of the set of words W (as illustrated in Fig. 8 : step 3). Thus, one stops the reading of the current word ω(π) and one goes to the next word ω(π).

It is to be noted that a built path π is validated, that means is feasible, when at least a word ω(π) of the set of word W is "validated" according to the conditions above-described.

And, a built path π is invalidated, that means is not feasible, when all the words ω(π) of the set of words W associated to said path are "invalidated" according to the conditions above-described. This means when the built path π has been validated by none of the word ω(π) of a set of words W.

In other words, a word is invalidated (step INVALID_W(ω(π))) when:

- The source node NS and the destination node ND are of homogeneous technologies tck (sub-step 2b:OK) but the stack STK is not empty (sub-step 2c:NOK) ; or
- If the source node NS and the destination node ND are of heterogeneous technologies tck (sub-step 2b:NOK) but the stack STK is empty (sub-step 2d:NOK).

It is to be noted that in a first not limited above-described, the validation of a built path π is performed each time a word ω(π) of the set of words W has been proceeded by the push-automaton AUT.

In a second not limited embodiment, the validation of a built path π is performed after all the words ω(π) of the set of words W have been proceeded by the push-automaton AUT. In this case, all the words read (entirely or not) are saved in a memory waiting for the step 2) to be performed. The same applied for the state of the stack STK associated to each word read ω(π).

In a not limited variant of the first and second embodiment, the step 2) of validation returns the number NBW of words ω(π) of the set of words W which have validated the path π, words which may be also called words validated. It permits to acquire a quality factor.

For example, the number NBW=2 for the case a) above-mentioned, as the two words ω1 and ω2 have been validated for the validation of the built path, and the number NBW=1 for the case b) above-mentioned, as there is only one word which has been validated for the validation of the built path (either ω1 or ω2).

This number NBW may be used in the computation of the heuristic factor and the updating of the pheromone factors as described previously.

Therefore, the adaptation functions checking MA permits to check the adaptation functions of a built path π and to validate said path π, either for an intermediate path, or for a final path and this thanks to the push-down automaton AUT.

## Network management element.

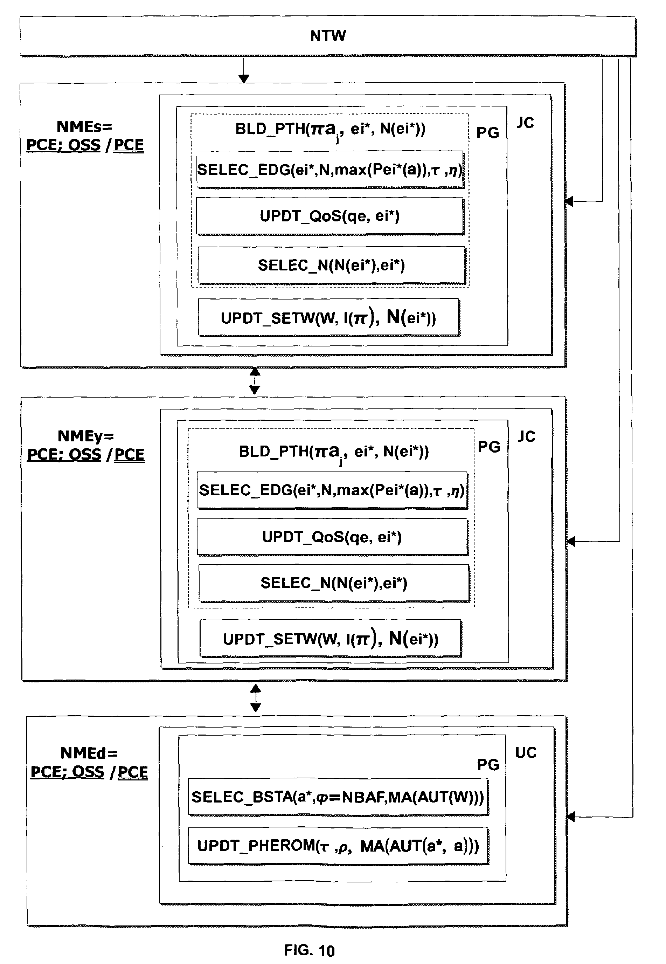

As illustrated in Fig. 10, a network management element NME for building a path π between a source node NS and a destination node ND for a network system NTW, under adaptation functions using an ant a colony A, a path π comprising a sequence of nodes N and edges E, is able to carry out the building method M.

As illustrated on Fig. 9, in the not limited schematic example given, the network system NTW is a multi-domain network and is able to manage:

- a source domain D1;
- a plurality of intermediate domains Dy;
- a destination domain D2,

each comprising a plurality of nodes and one network management element NMEs, NMEy, and NMEd respectively. Of course, other architectures may be taken as examples where a domain D comprises a plurality of network management elements NME.

In this example, the network system NTW is able to manage:

- a source network management element NMEs which is within the source domain D1 comprising the source node NS ;
- intermediate network management elements NMEy which are within intermediate domains Dy between the source domain D1 and a destination domain D2, said intermediate domains Dy comprising intermediate nodes NI which are between the source node NS and the destination node ND ; and
- the destination network management element NMEd which is within the destination domain D2 comprising the destination node ND.

It is to be noted that in a not limited embodiment, a domain is a collection of network management elements NME within a common sphere of address management or computational responsibility as defined in the IETF standard.

In not limited examples, a domain may be an Autonomous System (AS), an interior gateway protocol IGP routing area, or a Generalized Multiprotocol Label Switching overlay network layer.

It is to be noted that:

- An autonomous system AS usually refers to a group of routers within a network that are subject to a common authority and use the same intra-domain routing protocol.
- An area usually refers to a collection of routers that share full network topology information with each other but not necessarily with routers outside the area even those with which they share common administrative control.

The source, intermediate and destination network management elements NME are described hereinafter according to Figs. 9, 10, 11 and 12.

It is to be noted that a network management element NME is aware of:

- the topology of its own domain D, that is to say of how the nodes of said domain D are arranged physically altogether within said domain D, and how they communicate with one another, and what are the Traffic Engineering capabilities (e.g. maximal bandwidth, transmission delay, etc.) on their links;
- the neighbor domains Dn of its own domain D; and
- the border nodes of the neighbor domains Dn;
- the network management elements NME of its neighbor domains.

To this end, a network management element uses a database.

The method M for building a path may be used for inter-domain path computation such as in not limited examples:

- Intra-carrier case:
- in optics, when an operator network is split in multiple domains with each domain gathering transport equipments from one operator for example.
- in IP/MPLS (Internet Protocol/Multiprotocol Label Switching), when an operator network is divided into multiple domains (i.e. IGP areas) for scalability purpose.
- Inter-carrier case: where each operator NME is likely to know about its neighbors' network management element NME.

• Inter-domain (INTER D)

o Distributed network system.

In the case of inter-domain, in a first not limited embodiment, illustrated in Fig. 10, the method M for building a path may be distributed on a plurality of network management element NME.

In this case, in not limited examples, a network management element NME is:

- a Path Computation Element, PCE as per specified in the document RFC4555 - A Path Computation Element (PCE) - based Architecture - August 2006. In this case the database aforementioned is called traffic Engineering Database (TED) ; or
- an Operational Support System, OSS.

In this case, the source network management element NMEs and the intermediate network management element NMEy are able to:

- for each ant a of the colony A :
- build a path $\pi$ between the source node and the destination node according to a selecting probability $P_{ei}^{*}(a)$ which is based on pheromone factors $\tau$ and heuristic factors $\eta$ associated to edges and/or nodes, a path $\pi$ comprising a sequence of nodes N and edges E ;
- update an associated set of words W with label(s) of the ant's built path $\pi$, at least one label $\omega(\pi)$ being associated to each edge or each node of said built path $\pi$, said label(s) belonging to an alphabet $\Sigma$ representing technologies tck and adaptation functions supported by edges and/or nodes of the network system NTW.

Furthermore, in a not limited embodiment, the source network management element NMEs and the intermediate network management element NMEy are able to:

- from the source node NS
- choose an egress edge ei* of the node i according to the selecting probability $P_{ei}$*(a) which is based on pheromone factors $\tau$ and heuristic factors $\eta$ associated to edges and/or nodes ;
- update the path with the chosen egress edge ei* and with the next egress node N(ei*) ;
- select the egress node N(ei*) of the egress edge chosen ei* ;
- iterate the preceding steps with the selected egress node N(ei*) until the egress node selected N(ei*) is the destination node ND.

As for the destination network management element NMEd, it is able to:

- select the best ant a* according to :
- an optimization criterion $\varphi$ which is defined by adaptation functions according to an adaptation functions checking, said adaptation functions checking being based on the associated set of words W of a built path $\pi$ using a push-down automaton AUT, said push-down automaton AUT comprising a stack STK and associated stack commands $\Phi$, said alphabet $\Sigma$, states st and transitions tr which labels l($\pi$) of the alphabet $\Sigma$ are associated to;
- update pheromone factors $\tau$ associated to the ants' built paths $\pi$ according to optimization criterions of the best ant a* and of the other ants a, said optimization criterions being defined by adaptation functions according to an adaptation functions checking for said built paths $\pi$.

It is to be reminded that the nodes N described in a not limited example are routers. Thus, when a router NS of the domain D1 (called the source node or here a source router) wants to transmit some data to router ND of another domain D2 (called a destination node or here a destination router), it delivers a service to the destination router ND. The method M for building a path is thus carried out by a source network management element NMEs within the source domain D1, intermediate network management elements NMEy within intermediate domain Dy, and the destination network management element NMEd within the destination domain D2.

Hence, in a not limited embodiment, an ant a as described before is a request REQ sent by the source node NS, and upon receiving said request REQ, the network management element NME, here the source one NMEs, is able to transmit it to a next network management element, here an intermediate one NMEy, after performing the steps of:

- choosing the egress edge ei* ;
- updating the path for the ant a ; and
- updating the set of words W.

The request REQ is then transmitted from one intermediate network management element NMEy to another one NMEy until the destination network management element NMEd is reached.

The destination management element NMEd then performs the steps of:

- selecting the best ant a*, i.e. the best request REQ ; and
- updating the pheromone factors $\tau$, as described before.

It is to be noted that in this example, the optimization criterion $\varphi$ is set up by the source network management element NMEs.

In a not limited embodiment, a request REQ comprises:

- an ant identification IDA ;
- a list of nodes N and edges E of the associated built path $\pi$ ;
- the set W of words $\omega(\pi)$ associated to an ant a ;
- addresses of the source node NS and of the destination node ND ; and
- the list of the preceding network management elements NME which have carried the request REQ.

It permits to exchange this information from one network management to another one.

o Centralized network system.

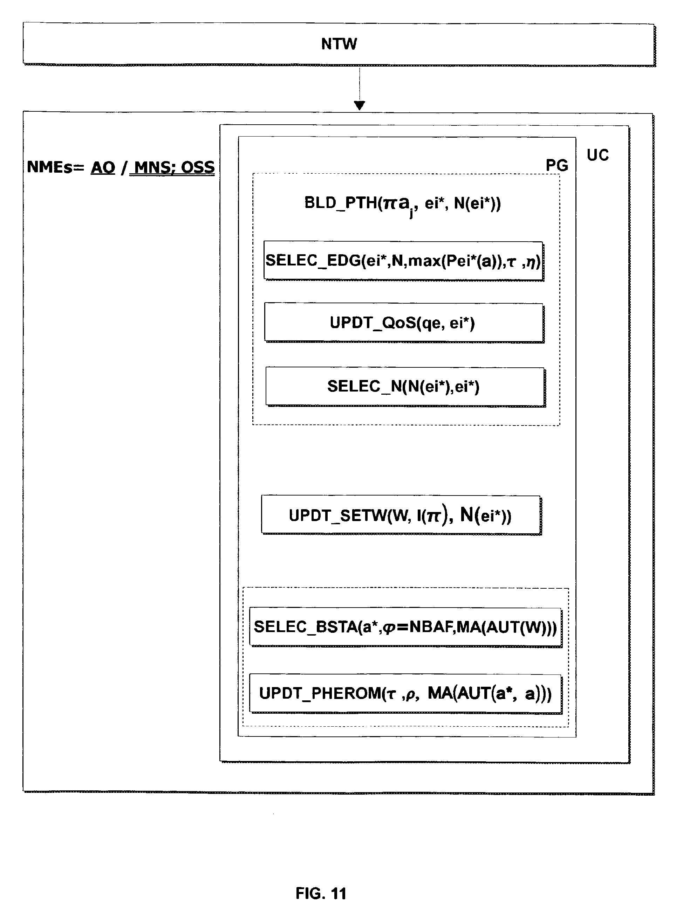

In a second not limited embodiment, illustrated in Fig. 11, the method M for building a path may be centralized on one network management element NME.

In this case, in not limited examples, a network management element NME is an administrative owner AO which is a third party independent from the operators.

In this case, the source network management element NMEs, the intermediate network management element NMEy, and the destination network management element NMEd are able to:

- for each ant a of the colony A :
- build a path $\pi$ between the source node and the destination node according to a selecting probability $P_{ei}*(a)$ which is based on pheromone factors $\tau$ and heuristic factors $\eta$ associated to edges and/or nodes, a path $\pi$ comprising a sequence of nodes N and edges E ;
- update an associated set of words W with label(s) of the ant's built path $\pi$ of the ant a, at least one label $\omega(\pi)$ being associated to each edge or each node of said built path $\pi$, said label(s) belonging to an alphabet $\Sigma$ representing technologies tck and adaptation functions supported by edges and/or nodes of the network system NTW.
- select the best ant a* according to :
- an optimization criterion $\varphi$ which is defined by adaptation functions according to an adaptation functions checking, said adaptation functions checking being based on the associated set of words W of a built path $\pi$ using a push-down automaton AUT, said push-down automaton AUT comprising a stack STK and associated stack commands $\Phi$, said alphabet $\Sigma$, states st and transitions tr which labels l($\pi$) of the alphabet $\Sigma$ are associated to;
- update pheromone factors $\tau$ associated to the ants' built paths $\pi$ according to optimization criterions of the best ant a* and of the other ants a, said optimization criterions being defined by adaptation functions according to an adaptation functions checking for said built paths $\pi$.

In a not limited embodiment, the source network management element NMEs, the intermediate network management element NMEy, and the destination network management element NMEd are further able to:

- from the source node NS
- choose an egress edge ei* of the node i according to the selecting probability $P_{ei}*(a)$ which is based on pheromone factors $\tau$ and heuristic factors $\eta$ associated to edges and/or nodes ;
- update the path with the chosen egress edge ei* and with the next egress node N(ei*) ;
- select the egress node N(ei*) of the egress edge chosen ei* ;
- iterate the preceding steps with the selected egress node N(ei*) until the egress node selected N(ei*) is the destination node ND.

• Intra-domain (INTRA D)

In the case of intra-domain, in a first not limited embodiment, illustrated in Fig. 10, the method for building a path may be distributed on a plurality of network management elements NME.

In this case, in not limited examples, a network management element NME is a Path Computation Element, PCE as per specified in the document RFC4555 - A Path Computation Element (PCE) - based Architecture - August 2006. In this case the database aforementioned is called traffic Engineering Database (TED).

In this case, the source network management element NMEs and the intermediate network management element NMEy are able to carry out the same steps as above-described in the first not limited embodiment of the inter-domain.

As for the destination network management element NMEd, it is able to carry out the same steps as above-described in the first not limited embodiment of the inter-domain.

In a second not limited embodiment, illustrated in Fig. 11, the method M for building a path may be centralized on one network management element NME.

In this case, in not limited examples, a network management element NME is:

- a Network Management System, NMS ; or
- an Operational Support System, OSS.

In this case, the source network management element NMEs, the intermediate network management element NMEy, and the destination network management element NMEd are able to carry out the same steps as above-described in the second not limited embodiment of the inter-domain.

• Inter-domain (INTER D) and Intra-domain (INTRA D)

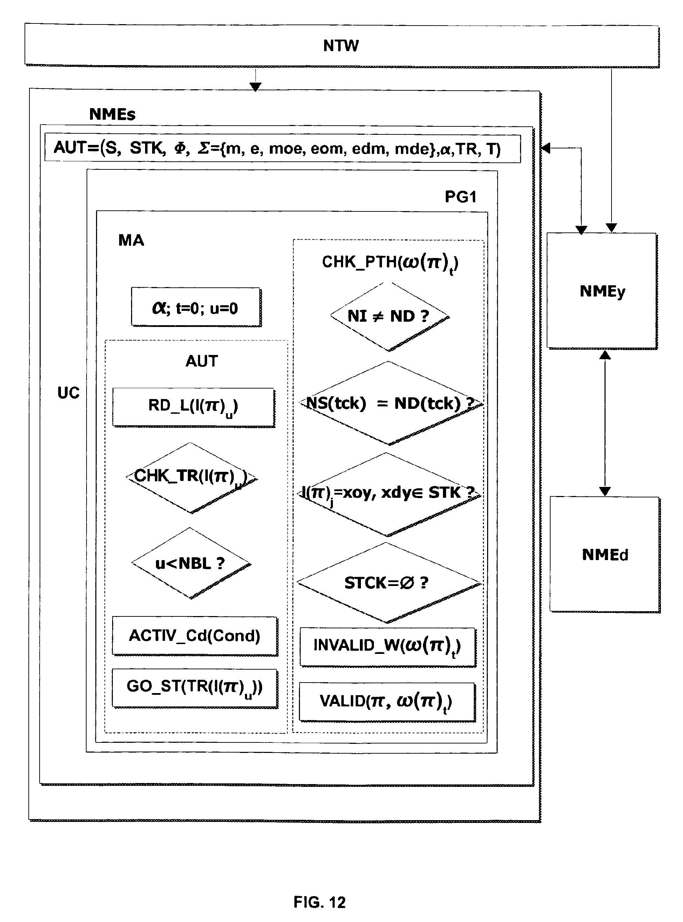

As illustrated in Fig. 12, in a not limited embodiment, a network management element NME for checking a path $\pi$ built between a source node NS and another node NI for a network system NTW, according to adaptation functions, is able to carry out the adaptation functions checking MA.

Moreover, in a not limited embodiment, a network management element NME comprising the push-down automaton AUT.

Therefore, in a not limited embodiment, a network management element NME comprises in particular a control unit UC which is able to:

- launch a push-down automaton AUT for reading a word $\omega(\pi)$ associated to the path built $\pi$ between a source node NS and another node NI, a word $\omega(\pi)$ comprising labels $l(\pi)$ of an alphabet $\Sigma$ representing technologies tck and adaptation functions supported by edges and/or nodes of the network system NTW, a label $l(\pi)$ of a word $\omega(\pi)$ being associated to an edge E or a node N of the built path $\pi$; and
- validate the built path $\pi$ according to the result of the reading of the word $\omega(\pi)$ and to the state of a stack STK of said push-automaton AUT, said stack STK being modified during the reading of the word $\omega(\pi)$.

In not limited embodiments, the control unit UC is further able to perform the corresponding sub-steps of the validation as described before.

In a not limited embodiment, the control unit UC is further able to:

- read a label $l(\pi)$ forming said word $\omega(\pi)$ ;
- check if there is a transition tr associated to the label read $l(\pi)$ ;
- if an associated transition tr exists:
- activate stack commands $\Phi$ on the stack STK according to the conditions Cond associated to the transition tr ;
- go to the egress state st* of the transition tr ; and
- iterate the preceding steps with the next label $l(\pi)$ of the word $\omega(\pi)$.

It is to be understood that the present invention is not limited to the aforementioned embodiments and variations and modifications may be made without departing from the scope of the invention. In the respect, the following remarks are made.

It is to be understood that the present invention is not limited to the aforementioned application.

The invention may be applied within a carrier network or within a trusted alliance between carriers using their own network management elements NME.

However, standardization is required when it comes to the interoperability between different operators' NMEs.

It is to be understood that the present invention is not limited to the aforementioned embodiments.

Hence, in not limited examples, other adaptation functions may be used, based on other technologies, such as in not limited examples IP or the Synchronous Digital Hierarchy protocol SDH.

Hence the optimization criterion $\varphi$ may takes into account any other criteria than the adaptation functions and the QoS parameters, such as in not limited examples:

- the number of crossed nodes (between the source node and the destination node);
- the residual bandwidth, i.e. the bandwidth which is available on an edge;
- a cost rate;
- the ratio between the cumulative quality of service parameter q(a) and cost rate etc;
- a combination of the criteria above and others.

It is to be understood that the methods and the elements according to the invention are not limited to any implementation.

Thus, in the not limited embodiment, where the adaptation functions checking, and therefore the push-down automaton, is used, i.e. during:

- computation of the heuristic factor;
- the verification of the set of words of the best ant; and
- the update of the pheromone factors;

one may only call the push-automaton only once for a same word (which may be used for the three above-mentioned cases), and one may use the result (word validated or not) of the first call of the push-automaton for the other cases for the same word. It avoids calling the push-down automaton a plurality of times for the same word and thus it permits to decrease the time processing.

There are numerous ways of implementing functions of the building method M by means of items of hardware or software, or both, provided that a single item of hardware or software can carry out several functions. It does not exclude that an assembly of items of hardware or software or both carry out a function. For example, the step of building a path may be combined with the step of updating an associated set of words, thus forming a single function without modifying the building method M in accordance with the invention.

Said hardware or software items can be implemented in several manners, such as by means of wired electronic circuits or by means of a computer program product that is suitable programmed respectively. A computer program product PG can be contained in a computer or in a network management element NME, said NME comprising a unit control UC, said unit control being hardware or software items as above stated.

The computer program product PG comprises a first set of instructions. Thus, said set of instructions contained, for example, in a computer programming memory or in a network management element memory NME, may cause the computer or the network management element NME to carry out the different steps of the building method M.

The same as above-described may be applied to the adaptation functions checking MA and to the push-automaton AUT.

The set of instructions may be loaded into the programming memory by reading a data carrier such as, for example, a disk. A service provider can also make the set of instructions available via a communication network such as, for example, the Internet.

Hence, some embodiments of the invention may comprise one or a plurality of the following advantages:

- it avoids leading to unfeasible paths as the cited prior art;
- it permits to have a complete automatic procedure to check the feasibility of a path built between two nodes according to adaptation functions;
- it permits to check the final path built between a source node and a destination node, but also an intermediate path built between a source node and an intermediate node ;
- it is simple to implement ;
- it permits to find a feasible path that allows multiple encapsulation/desencapsulation in an efficient manner ;
- it permits to find a feasible path subject to traffic engineering constraints such as adaptive constraints based on adaptation functions and QoS constraints based on QoS parameters ;
- it permits to give a solution which may be deployed within a service layer architecture to allow inter-carrier service ;
- the adaptation function checking may be dynamically set up and thus the push-down automaton may evolve in the same time as the alphabet evolves ;
- it has a runtime performance polynomial to the number of edges and nodes which better than a runtime performance exponential ; and
- it could be used with any alphabet representing functions similar to encapsulation/desencapsulation adaptation functions such as in not limited examples encryption/decryption functions.

Any reference sign in the following claims should not be construed as limiting the claim. It will be obvious that the verb "to comprise" and its conjugations do not exclude the presence of any other steps or elements beside those defined in any claim. The word "a" or "an" preceding an element or step does not exclude the presence of a plurality of such elements or steps.

**Claims**

1. Method (M) for building a path ($\pi$) between a source node (NS) and a destination node (ND) for a network system (NTW), under adaptation functions using an ant (a) colony (A), said method comprising the steps of :

    - for each ant (a) of the colony (A) :

        - building a path ($\pi$) between the source node and the destination node according to a selecting probability ($P_{ei}.(a)$) which is based on pheromone factors ($\tau$) and heuristic factors ($\eta$) associated to edges and/or nodes, a path (n) comprising a sequence of nodes (N) and edges (E) ;
        - updating an associated set of words (W) with label(s) (l($\pi$)) of the ant's built path ($\pi$), at least one label (l($\pi$)) being associated to each edge or each node of said built path ($\pi$), said label(s) belonging to an alphabet ($\Sigma$) representing technologies (tck) and adaptation functions supported by edges and/or nodes of the network system (NTW);

        - selecting the best ant (a*) according to :

            - an optimization criterion ($\varphi$) which is defined by adaptation functions according to an adaptation functions checking, said adaptation functions checking being based on the associated set of words (W) of a built path

($\pi$) using a push-down automaton (AUT), said push-down automaton (AUT) comprising a stack (STK) and associated stack commands ($\Phi$), said alphabet ($\Sigma$), states (st) and transitions (tr) which labels (l($\pi$)) of the alphabet ($\Sigma$) are associated to;

- updating pheromone factors ($\tau$) associated to the ants' built paths ($\pi$) according to optimization criterions of the best ant (a*) and of the other ants (a), said optimization criterions being defined by adaptation functions according to an adaptation functions checking for said built paths ($\pi$).

2. A method (M) according to the previous claim 1, wherein the preceding steps are performed for a determined number of cycles (NBI).

3. A method (M) according to the previous claim 1 or claim 2, wherein the step of building a path for an ant (a) comprises the sub-steps of :

- from the source node (NS)

- choosing an egress edge (ei*) of the node (i) according to the selecting probability ($P_{ei}\cdot(a)$) which is based on pheromone factors ($\tau$) and heuristic factors ($\eta$) associated to edges and/or nodes ;
- updating the path with the chosen egress edge (ei*) and with the next egress node (N(ei*)) ;
- selecting the egress node (N(ei*)) of the egress edge chosen (ei*) ;
- iterating the preceding steps with the selected egress node (N(ei*)) until the egress node selected (N(ei*)) is the destination node (ND).

4. A method (M) according to the preceding claim, wherein the step of updating the set of words (W) is performed with label(s) of the egress node (N(ei*)) selected.

5. A method (M) according to any one of the previous claims 3 or 4, wherein the step of updating the pheromone factors ($\tau$) comprises the sub-step of :

- updating the pheromone factor ($\tau$) associated to each chosen egress edge (ei*) and/or to each selected egress node (N(ei*)) of a built path ($\pi$), according to :

- a previous pheromone factor ($\tau$) of the egress edge (ei*) and/or of the egress node (Nei*) chosen, weighed by an evaporation rate (p) ; and
- the difference between the optimization criterion values of the best ant (a*) and of the other ants (a) of the colony (A) which have selected the considered edge and/or node, according to the adaptation functions checking based on their associated sets of words (W) respectively.

6. A method (M) according to any one of the previous claims 3 to 5, wherein the maximum selecting probability (max ($P_{ei}\cdot(a)$)) between the selecting probabilities ($P_{ei}\cdot(a)$) associated to each egress edge (ei*) of a node is chosen.

7. A method (M) according to any one of the previous claims 3 to 6, wherein the selecting probability ($P_{ei}\cdot(a)$) of an egress edge (ei*) is computed using the product of the pheromone factor and the heuristic factor of the egress edge (ei*) divided by the sum of said pheromone factors ($\tau$) and said heuristic factors ($\eta$) on all the egress edges of a node (i), said pheromone factors ($\tau$) and said heuristic factors ($\eta$) being weighed respectively by a determined parameter ($\propto$, $\beta$).

8. A method (M) according to any one of the previous claims, wherein the heuristic factor ($\eta$) is determined using the number of words ($\omega(\pi)$) in the set of words (W) associated to the ant (a) and validated by an adaptation functions checking.

9. A method (M) according to any one of the previous claims, wherein it further comprises a step of computing a cumulative quality of service (q(a)) with at least one quality of service parameter (q(e)) associated to the chosen egress edge (ei*) and/or at least one quality of service parameter (q(N(e))) associated to the egress node (N(ei*)) of said chose egress edge (ei*).

10. A method (M) according to the preceding claim, wherein the heuristic factor ($\eta$) is determined using the optimization criterion value ($\varphi$) when the cumulative quality of service parameter (q(a)) plus the quality of service parameter of the selected egress edge (q(e)) and/or of the egress node (q(N(e))) of said selected egress edge (ei*) respect an end-to-end required quality of service parameter threshold (qr), otherwise is determined using the inverse optimization criterion value (φ).

11. A method (M) according to the previous claim 9, wherein the heuristic factor (η)) is the sum of :

- the number of words (ω(π)) in the set of words (W) associated to the ant a and validated by an adaptation functions checking (MA) ; and
- for all end-to-end required quality of service parameters (id(qr)), a ratio between :

- the required end-to-end quality of service parameter threshold (qr); and
- a sum of the quality of service parameter value (q(e), q(N(e))) associated to the chosen egress edge (ei*) and to the egress node (N(ei*)) and the cumulative quality of service value (q(a)) of the built path (π).

12. A method (M) according to any one of the previous claims, wherein the optimization criterion (φ) is the lowest number of adaptation functions.

13. A method (M) according to any one of the previous claims, wherein the adaptation functions checking comprises the sub-steps of :

- launching a push-down automaton (AUT) for reading a word (ω(π)) associated to a path built (π) between a source node (NS) and an another node (NI), a word (ω(π)) comprising labels (l(π)) of the alphabet (Σ), a label (l(π)) of a word (ω(π)) being associated to an edge (E) or a node (N) of the built path (n) ; and
- validating the built path (π) according to the result of the reading of the word (ω(π)) and to the state of a stack (STK) of said push-automaton (AUT), said stack (STK) being modified during the reading of the word (ω(π)), said validation comprising the sub-steps of:

- when the word (ω(π)) has been read entirely and the another node (NI) is different from a destination node (ND), validating the path (π) being built with the adaptation functions corresponding to the word read (ω(π)) ;
- when the word (ω(π)) has been read entirely and the another node (NI) is equal to a destination node (ND) :

- if the source node (NS) and the destination node (ND) are of homogeneous technologies (tck) and if the stack (STK) is empty, validating the path (π) with the adaptation functions corresponding to the word read (ω(π)) ;
- if the source node (NS) and the destination node (ND) are of heterogeneous technologies (tck) and if the stack (STK) comprises a label representative of an adaptation function (xoy, xdy), validating the path (π) with the adaptation functions corresponding to the word read (ω(π)).

14. A method (M) according to any one of the previous claims, wherein the push-down automaton (AUT) comprises :

- a stack (STK) and associated stack commands (Φ) ;
- the alphabet (Σ) of labels (l(π)) representing technologies (tck) and adaptation functions supported by edges and/or nodes of a network system (NTW) ;
- states (st) and transitions (tr) which labels (l(π)) of the alphabet (Σ) are associated to;

and is able to :

- read a label (l(π)) forming said word (ω(π));
- check if there is a transition (tr) associated to the label read (l(π)) ;
- if an associated transition (tr) exists :

- activate stack commands (Φ) on the stack (STK) according to conditions (Cond) associated to the transition (tr) ;
- go to the egress state (st*) of the transition (tr) ; and
- iterate the preceding steps with the next label (l(π)) of the word (ω(π)).

15. A network management element (NME) for building a path (π) between a source node (NS) and a destination node (ND) for a network system (NTW), under adaptation functions using an ant (a) colony (A), a path (π) comprising a sequence of nodes (N) and edges (E), said network management element (NME) being able to :

- for each ant (a) of the colony (A) :

- build a path ($\pi$) between the source node and the destination node according to a selecting probability ($P_{ei}\cdot$(a)) which is based on pheromone factors ($\tau$) and heuristic factors ($\eta$) associated to edges and/or nodes, a path ($\pi$) comprising a sequence of nodes (N) and edges (E) ;
- update an associated set of words (W) with label(s) (l($\pi$)) of the ant's built path ($\pi$), at least one label (l($\pi$)) being associated to each edge or each node of said built path ($\pi$), said label(s) belonging to an alphabet ($\Sigma$) representing technologies (tck) and adaptation functions supported by edges and/or nodes of the network system (NTW);

- select the best ant (a*) according to :

- an optimization criterion ($\varphi$) which is defined by adaptation functions according to an adaptation functions checking (MA), said adaptation functions checking being based on the associated set of words (W) of a built path ($\pi$) using a push-down automaton (AUT), said push-down automaton (AUT) comprising a stack (STK) and associated stack commands ($\Phi$), said alphabet ($\Sigma$), states (st) and transitions (tr) which labels (l($\pi$)) of the alphabet ($\Sigma$) are associated to;

- update pheromone factors ($\tau$) associated to the ants' built paths ($\pi$) according to optimization criterions of the best ant (a*) and of the other ants (a), said optimization criterions being defined by adaptation functions according to an adaptation functions checking for said built paths ($\pi$).

**Patentansprüche**

1. Verfahren (M) zum Aufbau eines Pfads ($\pi$) zwischen einem Quellknoten (NS) und einem Zielknoten (ND) für ein Netzwerksystem (NTW), gemäß Anpassungsfunktionen unter Verwendung einer Kolonie (A) von Ameisen (a), wobei das Verfahren die folgenden Schritte umfasst:

- für jede Kolonie (A) von Ameisen (a):

- Aufbauen eines Pfads ($\pi$) zwischen dem Quellknoten und dem Zielknoten gemäß einer Auswahlwahrscheinlichkeit ($P_{ei}\cdot$(a)), welche auf mit den Kanten und/oder Knoten assoziierten Pheromonfaktoren ($\tau$) und heuristischen Faktoren ($\eta$) basiert, wobei ein Pfad ($\pi$) eine Folge von Knoten (N) und Kanten (E) umfasst;
- Aktualisieren einer assoziierten Gruppe von Wörtern (W) mit Kennzeichen (l($\pi$)) des von der Ameise aufgebauten Pfads ($\pi$), wobei mindestens ein Label (l($\pi$)) mit jeder Kante oder jedem Knoten des besagten aufgebauten Pfads ($\pi$) assoziiert ist, wobei das/die besagte(n) Kennzeichen einem Alphabet ($\Sigma$) angehört/angehören, welches von den Kanten und/oder den Knoten des Netzwerksystems (NTW) unterstützte Technologien (tck) und Anpassungsfunktionen darstellt;

- Auswählen der besten Ameise (a*) gemäß:

- Einem Optimierungskriterium ($\varphi$), welches durch Anpassungsfunktionen gemäß einer Anpassungsfunktionsprüfung definiert wird, wobei die besagte Anpassungsfunktionsprüfung auf einer dazugehörigen Gruppe von Wörtern (W) eines aufgebauten Pfads ($\pi$) unter Verwendung eines Kellerautomaten (AUT) basiert, wobei der besagte Kellerautomat (AUT) einen Stapelspeicher (STK) und dazugehörige Stapelspeicherkommandos ($\Phi$), das besagte Alphabet ($\Sigma$), Zustände (st) und Übergänge (tr), mit welchen Kennzeichen (l($\pi$)) des Alphabets ($\Sigma$) assoziiert sind, umfasst;

- Aktualisieren der mit den von den Ameisen aufgebauten Pfaden ($\pi$) assoziierten Pheromonfaktoren ($\tau$) gemäß Optimierungskriterien der besten Ameise (a*) und der anderen Ameisen (a), wobei die besagten Optimierungskriterien durch Anpassungsfunktionen gemäß einer Anpassungsfunktionsprüfung für die besagten aufgebauten Pfade ($\pi$) definiert werden.

2. Verfahren (M) nach dem vorstehenden Anspruch 1, wobei die vorausgehenden Schritte für eine festgelegte Anzahl von Zyklen (NBI) durchgeführt werden.

3. Verfahren (M) nach dem vorstehenden Anspruch 1 oder 2, wobei der Schritt des Aufbauens eines Pfads für eine Ameise (a) die folgenden Teilschritte umfasst:

- von dem Quellknoten (NS)

- Wählen einer Ausgangskante (ei*) des Knotens (i) gemäß der Auswahlwahrscheinlichkeit ($P_{ei}$*(a)), welche auf mit den Kanten und/oder Knoten assoziierten Pheromonfaktoren ($\tau$) und heuristischen Faktoren ($\eta$) basiert;
- Aktualisieren des Pfads mit der gewählten Ausgangskante (ei*) und mit dem nächsten Ausgangsknoten (N(ei*)) ;
- Auswählen des Ausgangsknotens (N(ei*)) der gewählten Ausgangskante (ei*) ;
- Wiederholen der vorhergehenden Schritte mit dem ausgewählten Ausgangsknoten (N(ei*)), bis der ausgewählte Ausgangsknoten (N(ei*)) der Zielknoten (ND) ist.

4. Verfahren (M) nach dem vorstehenden Anspruch, wobei der Schritt des Aktualisierens der Gruppe von Wörtern (W) mit Kennzeichen des ausgewählten Ausgangsknotens (N(ei*)) durchgeführt wird.

5. Verfahren (M) nach einem beliebigen der vorstehenden Ansprüche 3 oder 4, wobei der Schritt des Aktualisierens der Pheromonfaktoren ($\tau$) den folgenden Teilschritt umfasst:

- Aktualisieren des mit jeder gewählten Ausgangskante (ei*) und/oder jedem ausgewählten Ausgangsknoten (N(ei*)) eines aufgebauten Pfads ($\pi$) assoziierten Pheromonfaktors ($\tau$), gemäß:

- Einem vorherigen Pheromonfaktor ($\tau$) der gewählten Ausgangskante (ei*) und/oder des gewählten Ausgangsknotens (Nei*), gewichtet mit einer Evaporationsrate (p); und
- der Differenz zwischen den Optimierungskriterienwerten der besten Ameise (a*) und der anderen Ameisen (a) der Kolonie (A), welche die berücksichtigte Kante und/oder den berücksichtigten Knoten ausgewählt haben, gemäß der Anpassungsfunktionsprüfung auf der Basis deren jeweils dazugehörigen Gruppe von Wörtern (W).

6. Verfahren (M) nach einem beliebigen der vorstehenden Ansprüche 3 bis 5, wobei die maximale Auswahlwahrscheinlichkeit ($\max(P_{ei}$*(a))) unter den mit jeder Ausgangskante (ei*) eines Knotens assoziierten Auswahlwahrscheinlichkeiten ($P_{ei*}$(a)) gewählt wird.

7. Verfahren (M) nach einem beliebigen der vorstehenden Ansprüche 3 bis 6, wobei die Auswahlwahrscheinlichkeit ($P_{ei*}$(a)) einer Ausgangskante (ei*) unter Verwendung des Produktes des Pheromonfaktors und des heuristischen Faktors der Ausgangskante (ei*), geteilt durch die Summe der besagten Pheromonfaktoren ($\tau$) und der besagten heuristischen Faktoren ($\eta$) an allen Ausgangskanten eines Knotens (i) berechnet wird, wobei die besagten Pheromonfaktoren ($\tau$) und die besagten heuristischen Faktoren ($\eta$) jeweils mit einem vorgegebenen Parameter ($\alpha$, $\beta$) gewichtet werden.

8. Verfahren (M) nach einem beliebigen der vorstehenden Ansprüche, wobei der heuristische Faktor ($\eta$) unter Verwendung der Anzahl von Wörtern ($\omega(\pi)$) in der Gruppe von Wörtern (W), welche mit der Ameise (a) assoziiert sind, ermittelt und anhand einer Anpassungsfunktionsprüfung validiert wird.

9. Verfahren (M) nach einem beliebigen der vorstehenden Ansprüche, weiterhin umfassend einen Schritt des Berechnens einer kumulativen Dienstgüte (q(a)) mit mindestens einem mit der gewählten Ausgangskante (ei*) assoziierten Dienstgüteparameter (q(e)) und/oder mindestens einem mit dem Ausgangsknoten (N(ei*)) der besagten gewählten Ausgangskante (ei*) assoziierten Dienstgüteparameter (q(N(e))).

10. Verfahren (M) nach dem vorstehenden Anspruch, wobei der heuristische Faktor ($\eta$) unter Verwendung des Optimierungskriterienwertes ($\varphi$) ermittelt wird, wenn der kumulative Dienstgüteparameter (q(a)) plus der Dienstgüteparameter der ausgewählten Ausgangskante (q(e)) und/oder des Ausgangsknotens (q(N(e))) der besagten ausgewählten Ausgangskante (ei*) einen von Ende zu Ende geforderten Dienstgüteparametergrenzwert (qr) einhalten, anderenfalls wird er unter Verwendung des Kehrwertes des Optimierungskriteriums ($\varphi$) ermittelt.

11. Verfahren (M) nach dem vorstehenden Anspruch 9, wobei der heuristische Faktor ($\eta$) die Summe:

- Der Anzahl von Wörtern ($\omega(\pi)$) in der mit der Ameise (a) assoziierten und anhand einer Anpassungsfunktionsprüfung (MA) validierten Gruppe von Wörtern (W); und
- für alle von Ende zu Ende geforderten Dienstgüteparameter (id(qr)), eines Verhältnisses zwischen:

- Dem von Ende zu Ende geforderten Dienstgüteparametergrenzwert (qr); und
- einer Summe des mit der gewählten Ausgangskante (ei*) und dem Ausgangsknoten (N(ei*)) assoziierten Dienstgüteparameterwertes (q(e), q(N(e))) und des kumulativen Dienstgütewertes (q(a)) des aufgebauten Pfads ($\pi$)

ist.

12. Verfahren (M) nach einem beliebigen der vorstehenden Ansprüche, wobei das Optimierungskriterium ($\varphi$) die niedrigste Anzahl von Anpassungsfunktionen ist.

13. Verfahren (M) nach einem beliebigen der vorstehenden Ansprüche, wobei die Anpassungsfunktionsprüfung die folgenden Teilschritte umfasst:

- Starten eines Kellerautomaten (AUT) zum Lesen eines mit einem zwischen einem Quellknoten (NS) und einem anderen Knoten (NI) aufgebauten Pfad ($\pi$) assoziierten Wortes ($\omega(\pi)$), wobei ein Wort ($\omega(\pi)$) Kennzeichen (l($\pi$)) des Alphabets ($\Sigma$) enthält, wobei ein Kennzeichen (l($\pi$)) eines Wortes ($\omega(\pi)$) mit einer Kante (E) oder einem Knoten (N) des aufgebauten Pfads ($\pi$) assoziiert ist; und
- Validieren des aufgebauten Pfads ($\pi$) gemäß dem Ergebnis des Lesens des Wortes ($\omega(\pi)$) und dem Zustand eines Stapelspeichers (STK) des besagten Kellerautomaten (AUT), wobei der besagte Stapelspeicher (STK) während des Lesens des Wortes ($\omega(\pi)$) modifiziert wird, wobei das besagte Validieren die folgenden Teilschritte umfasst:

- Wenn das Wort ($\omega(\pi)$) komplett gelesen wurde und der andere Knoten (NI) ein anderer als ein Zielknoten (ND) ist, Validieren des Pfads ($\pi$), der aufgebaut wird, mit den Anpassungsfunktionen, welche dem gelesenen Wort ($\omega(\pi)$) entsprechen;
- wenn das Wort ($\omega(\pi)$) komplett gelesen wurde und der andere Knoten (NI) einem Zielknoten (ND) entspricht:

- Wenn der Quellknoten (NS) und der Zielknoten (ND) homogene Technologien (tck) aufweisen, und wenn der Stapelspeicher (STK) leer ist, Validieren des Pfads ($\pi$) mit den Anpassungsfunktionen, welche dem gelesenen Wort ($\omega(\pi)$) entsprechen;
- wenn der Quellknoten (NS) und der Zielknoten (ND) heterogene Technologien (tck) aufweisen, und wenn der Stapelspeicher (STK) ein Kennzeichen enthält, welches für eine Anpassungsfunktion (xoy, xdy) repräsentativ ist, Validieren des Pfads ($\pi$) mit den Anpassungsfunktionen, welche dem gelesenen Wort ($\omega(\pi)$) entsprechen.

14. Verfahren (M) nach einem beliebigen der vorstehenden Ansprüche, wobei der Kellerautomat (AUT) umfasst:

- Einen Stapelspeicher (STK) und zugehörige Stapelspeicherkommandos ($\Phi$) ;
- das Alphabet ($\Sigma$) von Kennzeichen (l($\pi$), welche von Kanten und/oder Knoten eines Netzwerksystems (NTW) unterstützte Technologien (tck) und Anpassungsfunktionen darstellen;
- Zustände (st) und Übergange (tr), mit welchen Kennzeichen (l($\pi$)) des Alphabets ($\Sigma$) assoziiert sind;

und fähig ist:

- ein Kennzeichen (l($\pi$)), welches das besagte Word ($\omega(\pi)$) bildet, zu lesen;
- zu prüfen, ob ein mit dem Lesen des Kennzeichens (l($\pi$)) assoziierter Übergang (tr) besteht;
- wenn ein assoziierter Übergang (tr) besteht:

- Stapelspeicherkommandos ($\Phi$) auf dem Stapelspeicher (STK) gemäß den mit dem Übergang (tr) assoziierten Bedingungen (Cond) zu aktivieren;
- in den Ausgangszustand (st*) des Übergangs (tr) zu schalten; und
- die vorhergehenden Schritt mit dem nächsten Kennzeichen (l($\pi$)) des Wortes ($\omega(\pi)$) zu wiederholen.

**15.** Netzwerkverwaltungselement (NME) für den Aufbau eines Pfads ($\pi$) zwischen einem Quellknoten (NS) und einem Zielknoten (ND) für ein Netzwerksystem (NTW), gemäß Anpassungsfunktionen unter Verwendung einer Kolonie (A) von Ameisen (a), wobei ein Pfad ($\pi$) eine Folge von Knoten (N) und Kanten (E) umfasst, wobei das besagte Netzwerkverwaltungselement (NME) für das Durchführen der folgenden Schritte ausgelegt ist:

   - für jede Kolonie (A) von Ameisen (a):

      - Aufbauen eines Pfads ($\pi$) zwischen dem Quellknoten und dem Zielknoten gemäß einer Auswahlwahrscheinlichkeit ($P_{ei^*}(a)$), welche auf mit den Kanten und/oder Knoten assoziierten Pheromonfaktoren ($\tau$) und heuristischen Faktoren ($\eta$) basiert, wobei ein Pfad ($\pi$) eine Folge von Knoten (N) und Kanten (E) umfasst;
      - Aktualisieren einer assoziierten Gruppe von Wörtern (W) mit Kennzeichen ($l(\pi)$) des von der Ameise aufgebauten Pfads ($\pi$), wobei mindestens ein Kennzeichen ($l(\pi)$) mit jeder Kante oder jedem Knoten des besagten aufgebauten Pfads ($\pi$) assoziiert ist, wobei das/die besagte(n) Kennzeichen einem Alphabet ($\Sigma$) angehört/angehören, welches von den Kanten und/oder den Knoten des Netzwerksystems (NTW) unterstützte Technologien (tck) und Anpassungsfunktionen darstellt;

   - Auswählen der besten Ameise (a*) gemäß:

      - Einem Optimierungskriterium ($\varphi$), welches durch Anpassungsfunktionen gemäß einer Anpassungsfunktionsprüfung (MA) definiert wird, wobei die besagte Anpassungsfunktionsprüfung auf einer dazugehörigen Gruppe von Wörtern (W) eines aufgebauten Pfads ($\pi$) unter Verwendung eines Kellerautomaten (AUT) basiert, wobei der besagte Kellerautomat (AUT) einen Stapelspeicher (STK) und dazugehörige Stapelspeicherkommandos ($\Phi$), das besagte Alphabet ($\Sigma$), Zustände (st) und Übergänge (tr), mit welchen Kennzeichen ($l(\pi)$) des Alphabets ($\Sigma$) assoziiert sind, umfasst;

   - Aktualisieren der mit den von den Ameisen aufgebauten Pfaden ($\pi$) assoziierten Pheromonfaktoren ($\tau$) gemäß Optimierungskriterien der besten Ameise (a*) und der anderen Ameisen (a), wobei die besagten Optimierungskriterien durch Anpassungsfunktionen gemäß einer Anpassungsfunktionsprüfung für die besagten aufgebauten Pfade ($\pi$) definiert werden.


**Revendications**

**1.** Procédé (M) de création d'un chemin ($\pi$) entre un noeud source (NS) et un noeud de destination (ND) pour un système de réseau (NTW), selon des fonctions d'adaptation en utilisant une colonie (A) de fourmis (a), ledit procédé comprenant les étapes suivantes :

   - pour chaque fourmi (a) de la colonie (A) :

      - créer un chemin ($\pi$) entre le noeud source et le noeud de destination selon une probabilité de sélection ($P_{ei^*}(a)$) qui est basée sur des facteurs de phéromones ($\tau$) et des facteurs heuristiques ($\eta$) associés aux bords et/ou aux noeuds, un chemin ($\pi$) comprenant une séquence de noeuds (N) et de bords (E) ;
      - mettre à jour un ensemble de mots (W) associé avec une/des étiquette(s) ($l(\pi)$) du chemin créé par des fourmis ($\pi$), au moins une étiquette ($l(\pi)$) étant associée à chaque bord ou à chaque noeud dudit chemin créé ($\pi$), ladite/lesdites étiquette(s) appartenant à un alphabet ($\pi$) représentant des technologies (tck) et des fonctions d'adaptation prises en charge par des bords et/ou des noeuds du système de réseau (NTW) ;

   - sélectionner la meilleure fourmi (a*) selon :

      - un critère d'optimisation ($\varphi$) qui est défini par des fonctions d'adaptation conformément à une vérification des fonctions d'adaptation, ladite vérification des fonctions d'adaptation étant basée sur l'ensemble de mots (W) associé d'un chemin créé ($\pi$) en utilisant un automate à pile (AUT), ledit automate à pile (AUT) comprenant une pile (STK) et des commandes de piles ($\varphi$) associées, lesdits alphabet ($\Sigma$), états (st) et transitions (tr) auxquels des étiquettes ($l(\pi)$) de l'alphabet ($\Sigma$) sont associées ;

   - mettre à jour des facteurs de phéromones ($\tau$) associés aux chemins créés par des fourmis ($\pi$) conformément aux critères d'optimisation de la meilleure fourmi (a*) et des autres fourmis (a), lesdits critères d'optimisation étant définis par des fonctions d'adaptation conformément à une vérification des fonctions d'adaptation pour

lesdits chemins créés ($\pi$).

2. Procédé (M) selon la revendication 1 précédente, dans lequel les étapes précédentes sont exécutées pour un nombre de cycles déterminé (NBI).

3. Procédé (M) selon la revendication 1 ou 2 précédente, dans lequel l'étape de création d'un chemin pour une fourmi (a) comprend les sous-étapes suivantes :

   - à partir du noeud source (NS)
   - choisir un bord de sortie (ei*) du noeud (i) conformément à la probabilité de sélection ($P_{ei*}(a)$) qui est basée sur des facteurs de phéromones ($\tau$) et des facteurs heuristiques ($\eta$) associés aux bords et/ou aux noeuds;
   - mettre à jour le chemin avec le bord de sortie (ei*) choisi et avec le noeud de sortie (N(ei*)) suivant ;
   - sélectionner le noeud de sortie (N(ei*)) du bord de sortie (ei*) choisi ;
   - répéter les étapes précédentes avec le noeud de sortie (N(ei*)) sélectionné jusqu'à ce que le noeud de sortie (N(ei*)) sélectionné soit le noeud de destination (ND).

4. Procédé (M) selon la revendication précédente, dans lequel l'étape de mise à jour de l'ensemble de mots (W) est exécutée avec la/les étiquette(s) du noeud de sortie (N(ei*)) sélectionné.

5. Procédé (M) selon l'une quelconque des revendications 3 et 4 précédentes, dans lequel l'étape de mise à jour des facteurs de phéromones ($\tau$) comprend les sous-étapes suivantes :

   - mettre à jour le facteur de phéromones ($\tau$) associé à chaque bord de sortie (ei*) choisi et/ou à chaque noeud de sortie (N(ei*)) sélectionné d'un chemin créé ($\pi$), conformément à :

     - un facteur de phéromones ($\tau$) précédent du bord de sortie (ei*) et/ou du noeud de sortie (Nei*) choisi, pondéré par un taux d'évaporation (p) ; et
     - la différence entre les valeurs de critère d'optimisation de la meilleure fourmi (a*) et des autres fourmis (a) de la colonie (A) qui ont sélectionné le bord et/ou le noeud considéré, conformément à la vérification des fonctions d'adaptation basée sur leurs ensembles de mots (W) associés respectivement.

6. Procédé (M) selon l'une quelconque des revendications 3 à 5 précédentes, dans lequel la probabilité de sélection maximum ($\max(P_{ei*}(a))$), entre les probabilités de sélection ($P_{ei*}(a)$) associées à chaque bord de sortie (ei*) d'un noeud, est choisie.

7. Procédé (M) selon l'une quelconque des revendications 3 à 6 précédentes, dans lequel la probabilité de sélection ($P_{ei*}(a)$) d'un bord de sortie (ei*) est calculée en utilisant le produit du facteur de phéromones et du facteur heuristique du bord de sortie (ei*) divisé par la somme desdits facteurs de phéromones ($\tau$) et desdits facteurs heuristiques ($\eta$) sur tous les bords de sortie d'un noeud (i), lesdits facteurs de phéromones ($\tau$) et lesdits facteurs heuristiques ($\eta$) étant pondérés respectivement par un paramètre déterminé ($\alpha$, $\beta$).

8. Procédé (M) selon l'une quelconque des revendications précédentes, dans lequel le facteur heuristique ($\eta$) est déterminé en utilisant le nombre de mots ($\omega(\pi)$) dans l'ensemble de mots (W) associé à la fourmi (a) et validé par une vérification des fonctions d'adaptation.

9. Procédé (M) selon l'une quelconque des revendications précédentes, comprenant en outre une étape de calcul d'une qualité de service cumulative (q(a)) avec au moins un paramètre de qualité de service (q(e)) associé au bord de sortie (ei*) choisi et/ou au moins un paramètre de qualité de service (q(N(e))) associé au noeud de sortie (N(ei*)) dudit bord de sortie (ei*) choisi.

10. Procédé (M) selon la revendication précédente, dans lequel le facteur heuristique ($\eta$) est déterminé en utilisant la valeur de critère d'optimisation ($\varphi$) lorsque le paramètre de qualité de service cumulative (q(a)) plus le paramètre de qualité de service du bord de sortie (q(e)) sélectionné et/ou du noeud de sortie (q(N(e))) dudit bord de sortie (ei*) sélectionné respectent un seuil de paramètre de qualité de service requis de bout en bout (qr), ou est déterminé en utilisant la valeur de critère d'optimisation inverse ($\varphi$).

11. Procédé (M) selon la revendication 9 précédente, dans lequel le facteur heuristique ($\eta$) est la somme :

- du nombre de mots (ω(π)) dans l'ensemble de mots (W) associé à la fourmi a et validé par une vérification des fonctions d'adaptation (MA) ; et
- pour tous les paramètres de qualité de service requis de bout en bout (id(qr)), un rapport entre :

- le seuil de paramètre de qualité de service de bout en bout requis (qr) ; et
- une somme de la valeur de paramètre de qualité de service (q(e), q(N(e))) associée au bord de sortie (ei*) choisi et au noeud de sortie (N(ei*)) et de la valeur de qualité de service cumulative (q(a)) du chemin créé (π).

**12.** Procédé (M) selon l'une quelconque des revendications précédentes, dans lequel le critère d'optimisation (φ) est le nombre le plus faible de fonctions d'adaptation.

**13.** Procédé (M) selon l'une quelconque des revendications précédentes, dans lequel la vérification des fonctions d'adaptation comprend les sous-étapes suivantes :

- exécuter un automate à pile (AUT) pour lire un mot (ω(π)) associé à un chemin créé (π) entre un noeud source (NS) et un autre noeud (NI), un mot (ω(π)) comprenant des étiquettes (l(π)) de l'alphabet (Σ), une étiquette (l(π)) d'un mot (ω(π)) étant associée à un bord (E) ou à un noeud (N) du chemin créé (π) ; et
- valider le chemin créé (π) conformément au résultat de la lecture du mot (ω(π)) et à l'état d'une pile (STK) dudit automate à pile (AUT), ladite pile (STK) étant modifiée durant la lecture du mot (ω(π)), ladite validation comprenant les sous-étapes suivantes :

- lorsque le mot (ω(π)) a été lu entièrement et que l'autre noeud (NI) est différent d'un noeud de destination (ND), valider le chemin (π) créé avec les fonctions d'adaptation correspondant au mot lu (ω(π)) ;
- lorsque le mot (ω(π)) a été entièrement lu et que l'autre noeud (NI) est égal à un noeud de destination (ND) :

- si le noeud source (NS) et le noeud de destination (ND) sont de technologies homogènes (tck) et si la pile (STK) est vide, valider le chemin (π) avec les fonctions d'adaptation correspondant au mot lu (ω(π)) ;
- si le noeud source (NS) et le noeud de destination (ND) sont de technologies hétérogènes (tck) et si la pile (STK) comprend une étiquette représentative d'une fonction d'adaptation (xoy, xdy), valider le chemin (π) avec les fonctions d'adaptation correspondant au mot lu (ω(π)) ;

**14.** Procédé (M) selon l'une quelconque des revendications précédentes, dans lequel l'automate à pile (AUT) comprend :

- une pile (STK) et des commandes de piles (Φ) associées ;
- l'alphabet (Σ) d'étiquettes (l(π)) représentant des technologies (tck) et des fonctions d'adaptation prises en charge par des bords et/ou des noeuds d'un système de réseau (NTW) ;
- des états (st) et des transitions (tr) auxquels des étiquettes (l(π)) de l'alphabet (Σ) sont associées ;

et peut :

- lire une étiquette (l(π)) formant ledit mot (ω(π)) ;
- vérifier s'il existe une transition (tr) associée à la lecture de l'étiquette (l(π)) ;
- si une transition (tr) associée existe :

- activer des commandes de piles (φ) sur la pile (STK) conformément aux conditions (Cond) associées à la transition (tr) ;
- passer à l'état de sortie (st*) de la transition (tr) ; et
- répéter les étapes précédentes avec l'étiquette (l(π)) suivante du mot (ω(π)).

**15.** Élément de gestion de réseau (NME) pour créer un chemin (π) entre un noeud source (NS) et un noeud de destination (ND) pour un système de réseau (NTW), selon des fonctions d'adaptation en utilisant une colonie (A) de fourmis (a), un chemin (π) comprenant une séquence de noeuds (N) et de bords (E), ledit élément de gestion de réseau (NME) pouvant :

- pour chaque fourmi (a) de la colonie (A) :

- créer un chemin ($\pi$) entre le noeud source et le noeud de destination selon une probabilité de sélection ($P_{ei*}(a)$) qui est basée sur des facteurs de phéromones ($\tau$) et des facteurs heuristiques ($\eta$) associés aux bords et/ou aux noeuds, un chemin ($\pi$) comprenant une séquence de noeuds (N) et de bords (E) ;
- mettre à jour un ensemble associé de mots (W) avec une/des étiquette(s) ($l(\pi)$) du chemin créé par des fourmis ($\pi$), au moins une étiquette ($l(\pi)$) étant associée à chaque bord ou à chaque noeud dudit chemin créé ($\pi$), ladite/lesdites étiquette(s) appartenant à un alphabet ($\Sigma$) représentant des technologies (tck) et des fonctions d'adaptation prises en charge par des bords et/ou des noeuds du système de réseau (NTW) ;

- sélectionner la meilleure fourmi (a*) selon :

- un critère d'optimisation ($\varphi$) qui est défini par des fonctions d'adaptation conformément à $\varphi$une vérification des fonctions d'adaptation (MA), ladite vérification des fonctions d'adaptation étant basée sur l'ensemble de mots (W) associé d'un chemin créé ($\pi$) en utilisant un automate à pile (AUT), ledit automate à pile (AUT) comprenant une pile (STK) et des commandes de piles ($\Phi$) associées, lesdits alphabet ($\Sigma$), états (st) et transitions (tr) auxquels des étiquettes ($l(\pi)$) de l'alphabet ($\Sigma$) sont associées ;

- mettre à jour des facteurs de phéromones ($\tau$) associés aux chemins créés par des fourmis ($\pi$) conformément aux critères d'optimisation de la meilleure fourmi (a*) et des autres fourmis (a), lesdits critères d'optimisation étant définis par des fonctions d'adaptation conformément à une vérification des fonctions d'adaptation pour lesdits chemins créés ($\pi$).

FIG. 1

FIG.2

FIG.3

BEGIN

$A=A \cup \{a_j\}$ ; i=NS ; $\pi a_j=\{NS\}$ ; k=0 ; j=1     0

k<NBI ?

OK     NOK

k=k+1     3

j<NBA ?

NOK     OK

SELEC_BSTA(a*,$\varphi$=NBAF,MA(AUT(W)))     4

BLD_PTH($\pi a_j$)     1

i ≠ ND ?

OK     NOK

UPDT_PHEROM($\tau$ ,$\rho$, MA(AUT(a*, a)))     5

SELEC_EDG(ei*,N,max(Pei*(a)),$\tau$ ,$\eta$)     1a

UPDT_PTH($\pi a_j$, ei*, N(ei*))     1b

UPDT_QoS(qe, ei*)     1c

SELEC_N(N(ei*),ei*)     1d

i=N(ei*)     1e

UPDT_SETW(W, I($\pi$), N(ei*))     2

j=j+1     3

FIG.4

**1a**

CALC_HEURIST($\eta$)

**1i(1)** — CALC_HEURIST($\eta$, NBW=AUT($\omega(\pi)$))

**1ii(2)** — CALC_HEURIST($\eta$, $\varphi$, QoS)

**1iii(3)** — CALC_HEURIST($\eta$, NBW=AUT($\omega(\pi)$), SUM(qr/(q(a)+q(e)+q(N(e)))))

**1ii** — CALC_PROBA(P(ei*($\pi$), $\tau$ ,$\eta$, $\alpha$, $\beta$)

**FIG. 5**

FIG. 6

AUT=(S, STK, Φ, Σ={m, e, moe, eom, edm, mde},α,TR, T)

moe, (Cond1:moe, MOE)

tr3

m

tr2

tr4

eom, (Cond1:eom, EOM)

e

tr7

« m »

« e »

st1*

st2*

edm, (Cond2:moe,$\overline{MOE}$ ;  EDM)

tr5

tr6

mde, (Cond2:eom,$\overline{EOM}$ ; MDE)

m

tr1

tr8

e

α

W={ω1=(m, moe, eom, mde, edm, m); ω2=(m, moe, eom, mde, m)}

FIG. 7

FIG. 8

Dy
Dy
D1
E
N
NS
N
E
N
NMEs
E
N
E
N
N
N
NMEy
D2
N
E
N
ND
N
E
NMEd

NTW=INTER_D / INTRA_D

FIG.9

NTW

NMEs=
**PCE; OSS /PCE**

JC

BLD_PTH($\pi a_j$, ei*, N(ei*))  PG

SELEC_EDG(ei*,N,max(Pei*(a)),$\tau$ ,$\eta$)

UPDT_QoS(qe, ei*)

SELEC_N(N(ei*),ei*)

UPDT_SETW(W, I($\pi$), N(ei*))

NMEy=
**PCE; OSS /PCE**

JC

BLD_PTH($\pi a_j$, ei*, N(ei*))  PG

SELEC_EDG(ei*,N,max(Pei*(a)),$\tau$ ,$\eta$)

UPDT_QoS(qe, ei*)

SELEC_N(N(ei*),ei*)

UPDT_SETW(W, I($\pi$), N(ei*))

NMEd=
**PCE; OSS /PCE**

UC

PG

SELEC_BSTA(a*,$\varphi$=NBAF,MA(AUT(W)))

UPDT_PHEROM($\tau$ ,$\rho$, MA(AUT(a*, a)))

**FIG. 10**

NTW

NMEs= <u>AO</u> / <u>MNS; OSS</u>

UC

PG

BLD_PTH($\pi a_j$, ei*, N(ei*))

SELEC_EDG(ei*,N,max(Pei*(a)),$\tau$ ,$\eta$)

UPDT_QoS(qe, ei*)

SELEC_N(N(ei*),ei*)

UPDT_SETW(W, I($\pi$), N(ei*))

SELEC_BSTA(a*,$\varphi$=NBAF,MA(AUT(W)))

UPDT_PHEROM($\tau$ ,$\rho$, MA(AUT(a*, a)))

FIG. 11

**FIG. 12**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7382731 B

**Non-patent literature cited in the description**

- *RFC4555 - A Path Computation Element (PCE) - based Architecture,* August 2006